# EUROPÄISCHE PATENTSCHRIFT

(11) **EP 2 681 054 B1**
(45) Veröffentlichungstag und Bekanntmachung des Hinweises auf die Patenterteilung: **10.09.2014**
(21) Anmeldenummer: 12707527.3
(22) Anmeldetag: 01.03.2012
(51) Int. Cl.: B42D 15/00, B32B 3/24

(54) **VERBUNDKÖRPER UND VERFAHREN ZUR HERSTELLUNG EINES VERBUNDKÖRPERS MIT EINEM INNENLIEGENDEN SICHERHEITSMERKMAL**
COMPOSITE BODY AND METHOD FOR PRODUCING A COMPOSITE BODY HAVING AN INTERNAL SECURITY FEATURE
CORPS COMPOSITE ET PROCÉDÉ DE PRODUCTION D'UN CORPS COMPOSITE MUNI D'UN SIGNE DE SÉCURITÉ SITUÉE À L'INTÉRIEUR

(30) Priorität: 01.03.2011 DE 102011004935
(43) Veröffentlichungstag der Anmeldung: 08.01.2014
(73) Patentinhaber: Bundesdruckerei GmbH, 10969 Berlin (DE)
(72) Erfinder: KULIKOVSKA, Olga, 14165 Berlin (DE); FISCHER, Jörg, 13053 Berlin (DE); PAESCHKE, Manfred, 16348 Wandlitz (DE); TRÖLENBERG, Stefan, 15749 Mittenwalde OT Ragow (DE); MUTH, Oliver, 12277 Berlin (DE)
(74) Vertreter: Obst, Bernhard
(86) Internationale Anmeldenummer: PCT/EP2012/053511
(87) Internationale Veröffentlichungsnummer: WO 2012/117053

(56) Entgegenhaltungen:
- DE-A1- 19 934 434
- DE-A1-102007 037 982

## Beschreibung

Die Erfindung betrifft einen Verbundkörper mit einem innenliegenden Sicherheitsmerkmal sowie ein Verfahren zu dessen Herstellung, insbesondere einen Verbundkörper, welcher eine Mikroperforation umfasst und als Wert- und/oder Sicherheitsdokumente ausgebildet wird.

### Hintergrund der Erfindung und Stand der Technik

Aus dem Stand der Technik ist es bekannt, unterschiedliche Sicherheitsmerkmale in Sicherheit- und/oder Wertdokumente zu integrieren, um eine Nachahmung oder Verfälschung dieser Dokumente zu verhindern oder zumindest erheblich zu erschweren. Eine Art von Sicherheitsmerkmalen umfassen in Substratschichten eingebrachte Ausnehmungen, die vorzugsweise als Durchbrechungen eines Substrats oder einer Substratschicht ausgebildet sind.

Aus der FR 2 564 622 A1 ist ein Verfahren zum Herstellen von Ausweisdokumenten bekannt, die Angaben aufweisen, die das Identifizieren oder Erkennen wenigstens eines Inhabers ermöglichen. Das dort beschriebene Verfahren umfasst das Übertragen von solchen Angaben auf einen festen Träger in Form mindestens einer Menge von Punkten, die als Vertiefungen oder Erhebungen in diskreten Intervallen verteilt sind. Ein erster Satz solcher Punkte stellt beispielsweise ein Passfoto des Inhabers dar. Ein zweiter Satz von Punkten kann beispielsweise verschiedene Symbole, beispielsweise Buchstaben, Zahlen oder andere grafische Symbole umfassen, die die Identität, eine Adresse oder weitere Informationen über den Nutzer angeben. Die Punkte können durch ein gesteuertes Eindringen eines Werkzeugs in das Medium des Substrats oder über eine Wechselwirkung mit einem Laser ausgebildet werden. Die Punkte werden beispielsweise als Vertiefungen in regelmäßigen Intervallen angeordnet. Um Kontraste zwischen helleren und dunkleren Abschnitten zu erhalten, ist vorgeschlagen, bei konstantem Abstand der Punkte deren Querschnitt zu variieren. Eine andere Ausführungsform sieht vor, dass Vertiefungen in einheitlicher Tiefe hergestellt werden und die Dichte der Punkte variiert wird. Die Punkte können auch als Durchgangslöcher, d.h. Durchbrechungen, durch das Substrat ausgebildet sein.

Ein ähnliches Sicherheitsmerkmal ist aus der EP 0 936 975 B1 bekannt, bei dem ein Dokument gegen Fälschung geschützt wird, indem es ein Sicherheitsmerkmal in Form eines Perforationsmusters umfasst und das Perforationsmuster Löcher unterschiedlicher Größen umfasst, wobei sich das Perforationsmuster über eine geschlossene Oberfläche des Dokuments erstreckt und ein Passbild repräsentiert. Das Perforationsmuster ist mittels Laserlicht erzeugt.

Aus der DE 199 34 434 A1 sind ein Wert- und Sicherheitsdokument mit Perforierungen bekannt, bei denen Kanäle als zusätzlicher Sicherheits- und Echtheitsnachweis angeordnet sind. Es sind Ausführungsformen beschrieben, bei denen die Kanäle in unterschiedlichem Winkel zur Oberfläche des Wert- und/oder Sicherheitsdokuments eingebracht sind. Durch die unterschiedliche Neigung der Kanäle gegenüber der Oberflächennormalen soll erreicht werden, dass aus unterschiedlichen Betrachtungsrichtungen jeweils nur die Kanäle der Perforation erkennbar sind, deren Kanalachsen im Wesentlichen mit einer Betrachtungsrichtung fluchten.

Die beschriebenen Ausführungsformen weisen den Nachteil auf, dass diese zum Teil dadurch manipuliert werden können, dass nachträglich zusätzliche neue Kanäle oder Perforationsbestandteile in ein bereits existierendes Dokument eingefügt oder vorhandene Öffnungen nachträglich verschlossen werden können.

Aus der DE 10 2007 037 982 A1 ist ein Sicherheitsdokument mit einer wasserzeichenartigen Struktur bekannt. Beschrieben ist ein Verbundsicherheitsdokument mit einer wasserzeichenartigen Struktur und ein Verfahren zur Herstellung eines solchen Verbundsicherheitsdokuments, bei dem mehrere Schichten bereitgestellt werden, die mehreren Schichten übereinander angeordnet werden und die mehreren übereinander angeordneten Schichten in einem Hochdruck-Hochtemperatur-Laminierverfahren zu einem Dokumentkörper laminiert werden, wobei mindestens in eine der mehreren Schichten mindestens eine Aussparung eingebracht wird und die mehreren Schichten so angeordnet werden, dass die mindestens eine Aussparung zu einer Ober- und einer Unterseite der übereinander angeordneten Schichten abgeschlossen ist und das Volumen der Aussparung leer ist und die mindestens eine leere Aussparung evakuiert wird und das Laminieren so ausgeführt wird, dass sich eine hohlreliefartige Struktur in dem Dokumentkörper ausbildet. Die dort beschriebenen Gegenstände weisen eine Modulation einer Materialstärke des Verbundkörpers im fertigen Zustand auf.

Aus der EP 1 602 782 A2 sind eine ein Sicherheitsfilmstück enthaltende Faserbahn und ein Verfahren zu dessen Herstellung bekannt. Ein Blatt aus faserhaltigem Material, z.B. ein aus Zellulosefasern hergestelltes Papier, umfasst einen Plastikfilmstreifen, wobei der Streifen mit Perforationen unterschiedlicher Größe hergestellt ist, die eine homogene Porosität verleihen. Die Perforationen sind mit den Fasern gefüllt, wobei die Perforationen eine Größe zwischen 100 µm und 1.000 µm und eine Beabstandung zwischen 200 µm und 2.000 µm aufweisen. Die Perforationen können so ausgebildet sein, dass ein wieder erkennbares Muster entsteht. Die Oberfläche des Plastikfilmstreifens kann teilweise metallisiert sein, wobei sich die Perforationen durch die Metallisierung erstrecken.

Es besteht ein fortwährender Bedarf, neuartige Sicherheitsmerkmale für Sicherheitsdokumente zu schaffen, die eine höhere Fälschungs- und Manipulationssicherheit aufweisen, d.h. einen Aufwand für Fälscher deutlich erhöhen oder Fälschungen leichter erkennbar machen.

### Grundgedanke der Erfindung

Der Erfindung liegt die Idee zugrunde, einen Verbundkörper für ein Sicherheitsdokument herzustellen, welcher ein im Durchlicht verifizierbares Sicherheitsmerkmal aufweist, welches im Inneren des Verbundkörpers möglichst gut gegen Manipulationen geschützt ist. Hierzu sind in einer inneren Materialschicht bzw. werden bei der Herstellung in eine Substratschicht, welche im fertigen Produkt die innere Materialschicht bildet, Perforierungen in Form von Mikrokanälen eingebracht. Ein anschließendes Laminieren mit umgebenden transparenten oder zumindest transluzenten Substratschichten, die in dem gebildeten Verbundkörper äußere Materialschichten bilden, erfolgt in der Weise, dass die gebildete Mikroperforation im Innern des Verbundkörpers "eingeschlossen" wird und gegenüber einer Manipulation, beispielsweise einem Zufügen von weiteren Perforationslöchern und/oder ein Auffüllen von Perforationslöchern nachträglich unmöglich gemacht wird. Hierbei erfolgt das Zusammenfügen in der Weise, dass sich ein monolithischer Verbundkörper bildet und hierbei die erzeugten Perforationsöffnungen in der opaken Substratschicht nicht wieder durch das Material der opaken Substratschicht verschlossen oder durch transparentes oder transluzentes Material der darüber angeordneten Substratschichten vollständig aufgefüllt werden. Hierdurch kann nämlich verhindert werden, dass mit der Mikrostruktur im Zusammenhang stehende Oberflächenstrukturen in dem Verbundkörper entstehen, die zu tastbaren und/oder sichtbaren Oberflächenänderungen führen. Auch im Fall einer vollständigen Verfüllung der erzeugten Perforationsöffnungen in der opaken Substratschicht durch transparentes oder transluzentes Material der darüber angeordneten Substratschichten kann die Ausbildung von oben genannten wahrnehmbaren Oberflächenstrukturen verhindert werden. Der sich ergebende Verbundkörper weist somit eine glatte ebene Oberseite und eine glatte ebene Unterseite auf, wobei die Ober- und die Unterseite im Wesentlichen parallel zueinander ausgerichtet sind. Um dies zu erreichen, werden die zusammengefügten Substratschichten, d.h. die opake Substratschicht sowie die hiermit im Laminationsschritt verbundenen transparenten Substratschichten hinsichtlich ihrer Materialeigenschaften so ausgewählt, dass diese alle auf Basis desselben thermoplastischen Polymermaterials hergestellt sind, so dass sich in dem Hochdruck-Hochtemperatur-Laminationsverfahren ein monolithischer Verbundkörper ausbildet.

### Definitionen

Als monolithisch wird ein Verbundkörper, welcher aus unterschiedlichen Substratschichten hergestellt ist bzw. ein Verbundkörper, der unterschiedliche Materialschichten aufweist, angesehen, bei dem die sich ergebende Polymerstruktur zwischen den ursprünglichen Substratschichten bzw. den Materialschichten im fertigen Verbundkörper keinen Phasenübergang hinsichtlich der Polymerstruktur aufweist. Dies bedeutet, dass eine Umordnung der Polymerstruktur über die ursprüngliche Substratschichtgrenze hinweg so erfolgt, dass diese Schichtgrenze anschließend aufgrund der Polymerstruktur nicht mehr zu erkennen ist. Es wird an dieser Stelle angemerkt, dass in dem fertigen Verbundkörper dennoch unterschiedliche Materialschichten identifizierbar sind, da beispielsweise die opake Materialschicht, welche aus der ursprünglich opaken Substratschicht hervorgegangen ist, Zusatzstoffe, welche in die Polymermatrix eingebunden sind, umfasst, die die optischen Eigenschaften in dieser Materialschicht gegenüber den transparenten Materialschichten verändern. Dennoch ist der durch das Polymermaterial gebildete Dokumentkörper hinsichtlich seiner mechanischen Stabilität, insbesondere gegenüber einer Delamination bzw. Trennbarkeit der einzelnen Materialschichten, als ein einheitlicher, im Wesentlichen homogener Körper anzusehen.

Als eben wird eine Oberfläche angesehen, welche flach ist und durch eine nicht gekrümmte Fläche in einem kartesischen Raum approximiert werden kann. Eine Oberfläche wird als eben im Bereich darunter liegender Mikroperforation angesehen, wenn Abweichungen gegenüber einer flachen, nicht gekrümmten kartesischen Ebene in einem Flächengebiet, unterhalb dessen in einer Materialschicht Mikroperforationen angeordnet sind, in derselben Größenordnung liegen, wie die bei einem gleichartig hergestellten Verbundkörper auftretenden Abweichungen, der keine Mikroperforationen in einer darunter liegenden Materialschicht aufweist.

Als Sicherheitsmerkmal wird jedes Merkmal bezeichnet, welches eine Nachahmung, Verfälschung, Manipulation oder Ähnliches eines Gegenstands unmöglich macht oder erschwert. Ein innenliegendes Perforationsmuster stellt ein Sicherheitsmerkmal dar.

Als Sicherheitsdokument wird jedes Dokument bezeichnet, welches mindestens ein Sicherheitsmerkmal, in der Regel eine Vielzahl unterschiedlicher Sicherheitsmerkmale, umfasst. Sicherheitsdokumente umfassen beispielsweise ID-Dokumente, Reisepässe, Personalausweise, Identifikationskarten, Führerscheine, Fahrzeugscheine, Fahrzeugbriefe, Zulassungsbescheinigungen, Firmenausweise, Bankkarten oder Kreditkarten Zugangsberechtigungskarten, Visa, aber auch gegen eine Fälschung gesicherte Etiketten, Eintrittskarten, Banknoten, Postwertzeichen, Wertpapiere oder Ähnliches. Solche Sicherheitsdokumente, die einen Wert verkörpern, wie beispielsweise Postwertzeichen, Frachtbriefe, Wertpapiere oder Banknoten, werden auch als Wertdokumente bezeichnet. Eine Abgrenzung zwischen Wert- und Sicherheitsdokumenten ist nicht in jedem Fall eindeutig möglich und im Hinblick auf den Erfindungsgegenstand auch nicht wesentlich. Im Sinne der hier beschriebenen Gegenstände werden Wertdokumente auch immer als Sicherheitsdokumente aufgefasst.

Als Substratschicht wird hier jeweils eine selbsttragende flache Entität verstanden. Flach bedeutet in diesem Zusammenhang, dass eine Materialstärke der Substratschicht senkrecht zu einer flächigen Ausdehnung einer Ober- und einer Unterseite, welche im Wesentlichen parallel zueinander orientiert sind, wesentlich kleiner als die Kantenlängen dieser Fläche sind. Eine Substratschicht kann insbesondere in Form einer Folie bereitgestellt werden, die als Bogen oder Endlosmaterial von einer Rolle bereitgestellt werden kann. Im Regelfall weist eine Substratschicht senkrecht zu den Hauptflächen an allen Orten parallel zur Oberflächennormalen gemessen eine einheitliche Materialstärke auf.

Als Materialschicht wird eine Volumenschicht in einem Verbundkörper angesehen, die eine im Wesentlichen homogene Beschaffenheit aufweist.

Durch Farbzusammensetzungen erzeugte Drucklagen werden nicht als Materialschichten angesehen.

Unter thermoplastischen Polymermaterialien werden solche Materialien verstanden, die in einem bestimmten Temperaturbereich plastisch verformbar sind. Beispiele für thermoplastische Polymermaterialien sind Polyethylenterephthalate (PET), Polyethylennaphthalate (PEN), Polyvinylchlorid (PVC), Acrylnitril-Butadien-Styrol (ABS), Polyamide (PA), Polyazetat (PLA), Polymethylmethacrylat (PMMA), Polycarbonat (PC), Polyethylen (PE), Polypropylen (PP), Polystyrol (PS), Polyetheretherketon (PEEK), um die Wichtigsten aufzuzählen. Ebenso können thermoplastische Elastomere (TPE), insbesondere thermoplastisches Polyurethan (TPO), als thermoplastische Werkstoffe zur Herstellung eines Verbundkörpers genutzt werden.

Als Mikroperforationen werden hier Durchgangsöffnungen durch eine Substratschicht bzw. Öffnungen in einer Materialschicht angesehen, welche kanalartig die Substratschicht bzw. Materialschicht durchdringen und deren maximaler Kanaldurchmesser quer zur Längserstreckung des Kanals im Mikrometerbereich liegt, vorzugsweise kleiner 200 µm, bevorzugt kleiner 100 µm ist, am bevorzugtesten im Bereich zwischen 10 und 70 µm liegt. Angaben zu Kanalabmessungen beziehen sich jeweils auf einen Zustand vor einem Laminieren.

Die Begriffe transparent oder transluzent und opak beziehen sich hier jeweils auf den Zustand, den ein Material nach dem Laminieren mit dem Hochdruck-Hochtemperatur-Laminationsverfahren annimmt. So sind beispielsweise Folien aus Polycarbonat, welche im fertigen Verbundkörper transparente Materialschichten bilden, häufig vor dem Laminieren aufgrund einer gewissen Oberflächenrauheit transluzent. Eine opake Substratschicht, welche beispielsweise ebenfalls auf Polycarbonatbasis hergestellt ist, kann beispielsweise über Zusätze von Titandioxid, so genanntes Titanweiß, opak ausgebildet sein.

Als transparent wird ein Gegenstand oder ein Raumgebiet bezeichnet, welches Licht, d.h. elektromagnetische Strahlung, einer Wellenlänge oder eines Wellenlängenbereichs in Form gerichteter Strahlung passieren lässt. Eine gerichtete Strahlung weist eine Intensitätsverteilung auf, die nur in einem zusammenhängenden begrenzten Raumwinklebereich eine hohe Intensität aufweist. Unter den übrigen Raumwinkeln ist die Intensität wesentlich, in der Regel um mehrere Größenordnungen, schwächer, vorzugsweise nahe null. Tritt eine solche gerichtete Strahlung durch ein transparentes Material, so bleibt die Eigenschaft erhalten, dass die Intensität in einem begrenzten Raumwinkelbereich konzentriert ist. Der Raumwinkelbereich kann sich zwar vergrößern, eine nennenswerte diffuse Streuung tritt jedoch nicht auf. Eine Abschwächung hinsichtlich einer Intensität der durch den transparenten Bereich bzw. das transparente Raumgebiet tretenden Strahlung kann jedoch auftreten. Durch ein transparentes Material hindurch ist eine Abbildung gemäß der geometrischen Optik möglich.

Als transluzent wird hingegen ein Material bezeichnet, bei dem die beschriebene Eigenschaft der Erhaltung der Richtungscharakteristik nicht mehr vorliegt. Hauptsächlich durch diffuse Streuung wird aus einer ursprünglich gerichteten Strahlung, eine Strahlung, deren Intensitätsverteilung in einem großen Raumwinkelbereich eine deutlich wahrnehmbare Intensität aufweist. Eine Intensitätsüberhöhung in dem oder um den Winkelbereich, der der mit der ursprünglichen Ausbreitungsrichtung der gerichteten Strahlung assoziiert werden kann, ist zwar möglich, beträgt aber nicht mehr mehrere Größenordnungen.

Als opak wird die Eigenschaft bezeichnet, welche einen Durchtritt von Licht, d.h. elektromagnetischer Strahlung, zumindest für eine Wellenlänge oder einen oder mehrere Wellenlängenbereiche unterbindet. Für die Angabe, ob ein Gegenstand oder ein Raumgebiet transparent oder opak ist, ist es von Bedeutung, dass die Wellenlänge oder der Wellenlängenbereich angegeben wird, für den diese Eigenschaften untersucht werden oder gelten. Es gibt eine Vielzahl von Materialien, welche beispielsweise im sichtbaren Wellenlängenbereich transparent, jedoch im ultravioletten Wellenlängenbereich opak sind.

Angaben wie opak, transluzent und transparent beziehen sich jeweils auf die Eigenschaft der Materialschicht nach dem Laminieren, beziehungsweise bei einer Substratschicht auf die Eigenschaft der nach dem Laminieren hieraus gebildeten Materialschicht.

### Bevorzugte Ausführungsformen

Vorgeschlagen wird ein Verfahren zum Herstellen eines Verbundkörpers mit einem innenliegenden Sicherheitsmerkmal, welches die Schritte umfasst:
- Bereitstellen mindestens einer opaken Substratschicht,
- Einbringen von Mikroperforationen in die mindestens eine opake Substratschicht,
- Bereitstellen von mindestens zwei weiteren transparenten und/oder transluzenten Substratschichten,
- Zusammenführen der mindestens einen opaken Substratschicht mit den mindestens zwei weiteren Substratschichten, so dass die mindestens eine opake Substratschicht zwischen den mindestens zwei weiteren Substratschichten angeordnet ist,
wobei vorgesehen ist,
dass die bereitgestellte mindestens eine opake Substratschicht und die bereitgestellten mindestens zwei weiteren Substratschichten so ausgewählt oder hergestellt werden, dass diese auf Basis desselben thermoplastischen Polymermaterials ausgebildet sind, und die zusammengeführten Substratschichten in einem Hochtemperatur-Hochdruck-Laminationsverfahren zu einem monolithischen Verbundkörper zusammengefügt werden, sodass eine Oberseite und eine Unterseite im Bereich der im Innern befindlichen Mikroperforationen eben ausgebildet werden.

Man erhält hierdurch einen Verbundkörper, insbesondere einen flachen Verbundkörper, mit einem innenliegenden Sicherheitsmerkmal, der eine Oberseite und eine Unterseite aufweist, die im Wesentlichen parallel zueinander orientiert sind, und wobei der Verbundkörper von der Oberseite zu der Unterseite hin aus mehreren für sich jeweils im Wesentlichen hinsichtlich der Materialeigenschaften homogenen Materialschichten besteht, wobei der Verbundkörper mindestens eine innenliegende opake Materialschicht, welche diese Materialschicht durchdringende Mikroperforationen umfasst, die jeweils zur Oberseite und zur Unterseite hin eine Öffnung aufweisen, und an der Oberseite und an der der Unterseite jeweils mindestens eine weitere transparente oder transluzente Materialschicht umfasst, wobei die Materialschichten alle auf Basis desselben thermoplastischen Polymermaterials hergestellt sind und der Verbundkörper hinsichtlich der Polymerstruktur monolithisch ausgebildet ist und die Oberseite und die Unterseite zumindest in einem Bereich, in dem die innenliegenden Mikroperforationen ausgebildet sind, eben sind.

Ein solcher Verbundkörper eignet sich als Sicherheitsdokument oder zur Herstellung eines Sicherheitsdokuments, da die Mikroperforation, welche ein Sicherheitsmerkmal darstellt, im Innern des Verbundkörpers ausgebildet ist und nicht mehr manipuliert werden können. Ein zusätzliches Einbringen von weiteren Perforationslöchern in die innenliegende opake Materialschicht ist ebenso unmöglich wie ein gezieltes Verschließen einzelner dieser Öffnungen. Zumindest im Durchlicht ist das durch die Mikroperforation gebildete Muster wahrnehmbar.

Gemäß einer Ausführungsform wird ein Sicherheitsdokument als Verbundkörper ausgebildet, der eine Oberseite und eine Unterseite aufweist, die im Wesentlichen parallel zueinander orientiert sind, und wobei der Verbundkörper von der Oberseite zu der Unterseite hin aus mehren in sich jeweils im Wesentlichen hinsichtlich der Materialeigenschaften homogenen Materialschichten besteht und wobei eine innenliegende Materialschicht opak ist und Mikroperforationen aufweist, die jeweils zur Oberseite und zur Unterseite hin eine Öffnung aufweisen, und wobei die zwischen der Oberseite und der innenliegenden opaken Materialschicht und die zwischen der innenliegenden opaken Materialschicht und der Unterseite befindlichen Materialschichten im Wesentlichen transparent sind, wobei die Materialschichten alle auf Basis desselben thermoplastischen Polymermaterials hergestellt sind und der Verbundkörper hinsichtlich der Polymerstruktur monolithisch ausgebildet ist und die Ober- und die Unterseite zumindest im Bereich der darunter liegenden Mikroperforation eben ausgebildet sind.

Eine besonders bevorzugte Ausführungsform sieht vor, dass die Perforationen mittels Laserbestrahlung erzeugt werden. Mittels Laserstrahlung können auf einfache Weise präzise und schnell Mikroperforationen hergestellt werden, die ein opakes Substrat aus einem Polymermaterial vollständig durchdringen.

Eine besonders hohe Fälschungssicherheit lässt sich mit einer Ausführungsform erreichen, bei der mindestens eine weitere opake Substratschicht bereitgestellt und in die mindestens eine weitere opake Substratschicht weitere Mikroperforationen eingebracht werden, und mindestens eine zusätzliche transparente oder transluzente Substratschicht bereitgestellt wird. Beim Zusammenführen der mindestens einen opake Substratschicht mit den mindestens zwei weiteren Substratschichten werden die mindestens eine weitere opake Substratschicht und die mindestens eine zusätzliche transparente oder transluzente Substratschicht so angeordnet, dass die mindestens eine zusätzliche transparente oder transluzente Substratschicht zwischen der mindestens einen opaken Substratschicht und der mindestens einen weiteren opaken Substratschicht angeordnet ist und die mindestens eine opake Substratschicht und die mindestens eine weitere opake Substratschicht zwischen den mindestens zwei weiteren transparenten und/oder transluzenten Substratschichten angeordnet sind. Man erhält somit eine innenliegende Anordnung einer opaken Substratschicht mit Perforationen und einer weiteren opaken Substratschicht mit weiteren Perforationen sowie einer hier zwischen angeordneten transparenten oder transluzenten zusätzlichen Substratschicht. Diese gesamten Substratschichten werden zwischen mindestens zwei weiteren transparenten und/oder transluzenten Substratschichten angeordnet, sodass die opake Substratschicht und die weitere opake Substratschicht jeweils innenliegende Substratschichten sind. Die Ausbildung und Anordnung der Mikroperforationen und weiteren Mikroperforationen wird so vorgenommen, dass in dem fertigen Verbundkörper ein hierdurch gebildetes Perforationsmuster und/oder weiteres Perforationsmuster bei Durchlichtbetrachtung sichtbar und wahrnehmbar sind. Auf diese Weise lassen sich Perforationsmuster erstellen, die bei Durchlichtbetrachtung voll transparente als auch teiltransparente Bereiche aufweisen. Besonders bevorzugt werden Ausführungsformen, bei denen die zwischen der opaken Substratschicht und der weiteren opaken Substratschicht angeordnete zusätzliche Substratschicht eine transluzente Substratschicht ist, also eine Substratschicht, welche eine diffuse Lichtstreuung im Innern der Substratschicht bewirkt. Hierdurch kann eine Entkopplung der Positionen der Mikroperforationen und der weiteren Mikroperforationen vorgenommen werden, ohne dass die Wahrnehmbarkeit des Perforationsmusters und/oder des weiteren Perforationsmusters wesentlich beeinträchtigt werden.

Bei einer Ausführungsform kann vorgesehen sein, dass beispielsweise das weitere Perforationsmuster in einem regelmäßigen Raster, welches beispielsweise aus äquidistant beabstandeten parallelen Linien entlang einer ersten Richtung und quer hierzu entlang einer zweiten Richtung verlaufenden äquidistant beabstandeten Musterlinien gebildet ist, an deren Schnittpunkten jeweils eine Rasterstelle ausgebildet ist, an der eine Mikroperforation ausgebildet ist.

Bei einer Ausführungsform ist an jeder der Musterstellen eine Mikroperforation ausgebildet, wobei alle Mikroperforationen gleichartig ausgebildet sind. Ein solches Muster von Mikroperforationen ermöglicht im Durchlicht im Bereich der Mikroperforationen einen gleichmäßigen Lichtdurchtritt durch die opake Substratschicht, bzw. Materialschicht, in der die entsprechenden Mikroperforationen ausgebildet sind.

Bei einer Ausführungsform sind die Mikroperforationen und die weiteren Mikroperforationen in dem fertigen Verbundkörper bezüglich einer Schichtung der unterschiedlichen Materialschichten bzw. der Substratschichten, aus denen die Materialschichten entstanden sind, nicht übereinander, sondern zueinander versetzt ausgebildet sind. Bei einer solchen Ausführungsform ist es möglich, eines der Perforationsmuster in Form eines regelmäßigen Musters auszubilden, welches lediglich einen homogenen Lichtdurchtritt im Bereich des Musters ermöglicht. Bei einer Betrachtung im Durchlicht ist dann das hierzu versetzte Perforationsmuster gut zu erkennen, sofern eine transluzente Schichte zwischen den beiden opaken Substratschichten bzw. Materialschichten angeordnet ist. Da eine Mehrfachstreuung von Licht in der transluzenten zusätzlichen Materialschicht erforderlich ist, um das durch die Mikroperforationen durch die opake Substratschicht durchtretende Licht zu den Öffnungen der weiteren Mikroperforationen der weiteren opaken Substratschicht zu leiten, ist eine Beleuchtung mit Licht hoher Intensität, beispielsweise mit fokussierter Strahlung, für eine Erkennbarkeit des weiteren Perforationsmusters bei einer Betrachtung im Durchlicht vorteilhaft. Ist das eine Perforationsmuster flächig begrenzt ausgebildet, so variiert eine Erkennbarkeit oder eine wahrgenommene Helligkeit des weiteren Perforationsmusters abhängig von der Beleuchtungsposition des einen Perforationsmusters. Hierdurch wird ein zusätzliches Sicherheitsmerkmal, welches leicht zu verifizieren ist, geschaffen.

Man erhält somit bei einer Ausführungsform einen flachen Verbundkörper, der neben der mindestens einen innenliegenden opaken Materialschicht mindestens eine weitere innenliegende opake Materialschicht umfasst, in der weitere, die mindestens opake Materialschicht durchdringende, Mikroperforationen ausgebildet sind, wobei zwischen der mindestens einen innenliegenden opaken Materialschicht und der mindestens einen weiteren opaken Materialschicht mindestens eine zusätzliche transparente oder transluzente Materialschicht angeordnet ist und die mindestens eine weitere innenliegende opake Materialschicht und die mindestens eine zusätzliche transparente oder transluzente Materialschicht auf Basis desselben thermoplastischen Polymermaterials hergestellt sind, wie die mindestens eine innenliegende opake Materialschicht und die weiteren Materialschichten, sodass der Verbundkörper hinsichtlich der Polymerstruktur aller Schichten monolithisch ausgebildet ist.

Gemäß einer Ausführungsform ist vorgesehen, dass eine der Substratschichten mit einer oder mehreren transluzenten Farbzusammensetzungen flächig in mindestens einem Bereich bedruckt ist, so dass in dem Verbundkörper eine Vielzahl, vorzugsweise sämtliche Mikroperforationen, durch die eine oder die mehreren verdruckten transluzenten Farbzusammensetzungen bei einer Betrachtung in Reflexion verdeckt und durch eine der weiteren transparenten Substratschichten nicht wahrnehmbar ist, jedoch ein durch die Mikroperforation gebildetes Muster im Durchlicht wahrnehmbar ist. Bei einer solchen Ausführungsform ist das gebildete Sicherheitsmerkmal zumindest von einer Oberfläche, beispielsweise der Oberseite oder der Unterseite, bei einer Betrachtung in Reflexion nicht wahrnehmbar. Eine Betrachtung in Reflexion bedeutet, dass eine Lichteinstrahlung auf den Verbundkörper von derselben Seite erfolgt, von der aus das der Verbundkörper betrachtet wird. Besonders bevorzugt findet eine flächige Bedruckung mit transluzenten Farbzusammensetzungen so statt, dass eine Vielzahl der Mikroperforationen, vorzugsweise sämtliche Mikroperforationen, auf beiden Seiten der sich ergebenden opaken Materialschicht, in der die Mikroperforationen ausgebildet sind, verdeckt sind. Beispielsweise können die transparenten Substratschichten, die die opake Substratschicht umgeben, an den der opaken Substratschicht zugewandten Seite jeweils zumindest in dem Bereich flächig bedruckt sein oder werden, welche an die Öffnungen der Mikroperforationen nach dem Zusammenführen der Substratschichten angrenzen. Man erhält somit einen Verbundkörper, bei dem zwischen einerseits der Oberseite und/oder der Unterseite und andererseits den Mikroperforationen transluzente Farbmittel angeordnet sind, so dass in dem Verbundkörper eine Vielzahl, vorzugsweise sämtliche, Mikroperforationen durch die transluzenten Farbmittel bei einer Betrachtung in Reflexion verdeckt und nicht wahrnehmbar sind, jedoch ein durch die Mikroperforationen gebildetes Muster im Durchlicht wahrnehmbar ist.

Um die Delaminationseigenschaften nicht nachteilig zu beeinflussen, ist bei einer bevorzugten Ausführungsform vorgesehen, dass die mindestens eine transluzente Farbzusammensetzung oder die mehreren transluzenten Farbzusammensetzungen auf Basis desselben thermoplastischen Polymermaterials hergestellt werden oder als die mindestens eine transluzente Farbzusammensetzung oder als die mehreren solchen Farbzusammensetzungen ausgewählt werden, die auf Basis desselben thermoplastischen Polymermaterials hergestellt sind wie die Substratschichten. Eine so hergestellte Drucklage kann somit im fertigen Verbundkörper nur noch anhand der Farbmittel erkannt werden, die die Materialeigenschaften verändern, jedoch nicht an einem Phasenübergang zwischen den unterschiedlichen Materialschichten bzw. der Drucklage.

Bei Ausführungsformen mit zwei innenliegenden opaken Materialschichten kann eine Drucklage das Perforationsmuster der einen Materialschicht für eine Betrachtung in Reflexion verbergen, welches zum Einstrahlen von Licht in die zusätzliche Materialschicht zwischen den opaken Materialschichten vorgesehen ist, um das weitere Perforationsmuster im Durchlicht zu beobachten. Die geeignete Einstrahlungsstelle von Licht kann somit nicht durch eine Betrachtung in Reflexion ermittelt werden. Alternativ oder zusätzlich können auch die Perforationen des weiteren Perforationsmusters durch eine transluzente Drucklage "verdeckt" sein.

Die Mikroperforationen werden bevorzugt in Form eines Musters eingebracht, wobei die nacheinander erzeugten Muster unterschiedlich ausgebildet werden, insbesondere um individualisierende oder personalisierende Informationen in den jeweiligen für ein Sicherheitsdokument vorgesehenen Verbundkörper zu speichern. Wird ein Verbundkörper gefertigt, aus dem nach dem Laminationsschritt mehrere Sicherheitsdokumente vereinzelt werden, so werden in einem Verbundkörper unterschiedliche Muster erstellt, die für unterschiedliche Personen individualisierend oder personalisierend sind. Werden einzelne Verbundkörper nacheinander hergestellt, die jeweils genau einer Person oder einem Gegenstand als Sicherheitsdokument zugeordnet werden können oder sollen, so werden nacheinander gefertigte Verbundkörper bzw. die hierfür verwendeten opaken Substratschichten mit unterschiedlichen Mustern in Form von Mikroperforationen versehen.

Besonders bevorzugt werden die Mikroperforationen gemäß einem virtuellen Raster angeordnet, in dem äquidistant beabstandete Rasterstellen vorhanden sind. Um bildliche Darstellungen speichern zu können, können die Abmesser, beispielsweise Durchmesser, von Perforationsöffnungen variiert, die Abstände zwischen Mikroperforationen variiert oder Kombinationen hiervon verwendet werden, um eine bildliche Ausgestaltung zu ermöglichen. Neben einer Erzeugung von bildlichen oder geografische Formen darstellenden Mustern ist es ebenfalls möglich, alphanumerische Zeichen und/oder Symbole mittels Mikroperforationen in den Verbundkörper zu speichern.

Bei einigen Ausführungsformen ist es bevorzugt, dass sehr hohe Temperaturen beim Laminationsverfahren verwendet werden, so dass die Substratschichten nahezu vollständig in den flüssigen Zustand übergehen. Um ein Schließen bzw. Zusammenfließen der Mikroperforationen bei dem Vorgang zu vermeiden, ist es vorgesehen, dass die Mikroperforationen vor dem Zusammenfügen mittels des Hochtemperatur-Hochdruck-Laminationsverfahrens mit einem transparenten Füllmaterial verfüllt werden, welches auf Basis desselben Polymermaterials hergestellt ist, wie die Substratschichten, aus denen der Verbundkörper gebildet wird. Man erhält somit einen Verbundkörper, bei dem die Mikroperforationen mit einem transparenten Füllmaterial ausgefüllt sind, welches auf Basis desselben Polymermaterials hergestellt ist, aus dem die innenliegende Materialschicht und die anderen Materialschichten hergestellt sind.

Bei einer solchen Ausgestaltung erhält man einen auch hinsichtlich seiner makroskopischen mechanischen Eigenschaften homogenen Verbundkörper, da die Mikroperforationen in diesem Fall keine Strukturschwächung des Gegenstands darstellen. Dies ist insbesondere bei großflächig ausgebildeten Mikroperforationsmustern und/oder bei Verbundkörpern von Interesse, bei denen eine Materialstärke der opaken Materialschicht eine wesentlich größere Materialstärke als die diese umgebenden Materialschichten aufweist.

Bei einer Ausführungsform werden die Mikroperforationen so ausgeführt, dass eine Verfärbung, insbesondere Schwärzung, der Ränder der Mikroperforationen auftritt. Wird die Perforation mit einem Laser ausgeführt, so ist es möglich zu erreichen, dass eine stärkere Verfärbung am Rand auf der Eintrittsseite der Laserstrahlung in die Materialschicht auftritt, in die die Mikroperforationen eingebracht werden. Ebenso kann eine Verfärbung der Mikrokanäle, welche die Mikroperforationen bilden, erreicht werden. Ein Erscheinungsbild solcher Mikroperforationen ähnelt oder gleicht dem von anderen Lasermarkierungen, die mittels eines Lasers beispielsweise über eine lokale Carbonisierung einer für eine Lasermarkierung vorbereiteten Substrat- oder Materialschicht eingebracht werden. Insbesondere wenn die Mikroperforationen unter einem von der Oberflächennormale abweichenden Winkel mittels einer Einstrahlung von Laserstrahlung ausgebildet sind, aber auch bei einer Ausbildung mit parallel zur Oberflächennormale eingestrahltem Laserlicht, unterscheidet sich das Erscheinungsbild einer Vielzahl von Mikroperforationen in einer opaken Schicht, deren Ränder wie angegeben geschwärzt werden und deren Positionen gemeinsam beispielsweise die Fläche von Schriftzeichen eines Schriftzuges ausfüllen, bei einer Draufsichtbetrachtung nicht von einem mittels Lasermarkierung in einer transparenten Schicht vor der opaken Schicht ausgebildeten gleichartigen Markierung, beispielsweise demselben Schriftzug. Erst bei einer Durchsichtbetrachtung ist ein Lichtdurchtritt durch die Mikroperforation erkennbar, so dass diese sich von der reinen Lasermarkierung unterscheiden lassen.

Es sind auch Ausführungsformen denkbar, bei denen nur die Einfärbung der Ränder der Mikroperforationen genutzt wird, um über das durch eine Vielzahl von Mikroperforationen gebildete Muster eine Information in dem Verbundkörper zu speichern. Eine Ausführungsform sieht somit vor, dass ein Teil der oder alle Mikroperforationen mit einem Laser so ausgebildet werden, dass ein Rand der Öffnungen der Mikroperforationen an jener Seite der opaken Substratschicht, auf die die Laserstrahlung zum Einbringen der Mikroperforationen gerichtet wird, und gegebenenfalls zusätzlich deren innere Wandung verfärbt werden.

Sind die Mikroperforationen ohne eine Verfärbung des Rands und/oder des Kanals im Innern der Substrat- oder Materialschicht ausgebildet oder ist ein Rand an einer Austrittsseite der die Mikroperforation erzeugenden Laserstrahlung nicht oder nicht wie erwünscht verfärbt, so kann eine Einfärbung der Ränder und des Kanals mittels eines gezielten Überdruckens der Mikroperforationen herbeigeführt werden. Wird eine flüssige Zubereitung, beispielsweise auf Basis eines Polymers, aus welchem die die Mikroperforationen enthaltende Schicht gebildet ist, verwendet, deren Viskosität geeignet gewählt wird, so kann über Kapillarkräfte erreicht werden, dass neben dem überdruckten Rand auch der die Mikroperforation begrenzende Kanal sowie bei geeigneter Wahl der aufgedruckten Zubereitungsmenge und Viskosität auch noch der Rand an der gegenüberliegenden Seite des Kanals der Mikroperforation eingefärbt werden. Zu beachten ist, dass die Zubereitung so gewählt werden kann, dass der Kanal nicht vollständig mit der Zubereitung verfüllt wird. Eine Ausführungsform sieht somit vor, dass zumindest auf eine Gruppe der Mikroperforierungen gezielt eine Verfärbungszubereitung aufgedruckt wird, deren Viskosität und/oder Oberflächenspannung so gewählt werden, dass jeweils nur ein Rand der Öffnung der gezielt bedruckten Perforationen und gegebenenfalls zusätzlich die innere Wandung sowie gegebenenfalls ferner zusätzlich ein Rand einer gegenüberliegenden Öffnung der opaken Substratschicht verfärbt wird, jedoch weder die Öffnung noch die gegenüberliegende Öffnung noch der Kanal transluzent oder opak verschlossen werden.

Dieses beschriebene Verfahren zum Einfärben der Öffnungen und der Kanalwandung kann auch angewendet werden, wenn die Mikroperforationen so ausgebildet sind oder werden, dass beim Einbringen der Mikroperforationen selbst keine Verfärbung an den Rändern auftritt.

Man erhält bei einer Ausführungsform einen flachen Verbundkörper, bei dem bei einem Teil der Mikroperforationen ein Rand einer Öffnung, gegebenenfalls zusätzlich eine Wandung eines Kanals und gegebenenfalls ferner zusätzlich ein Rand einer gegenüberliegenden Öffnung verfärbt sind, ohne das der Kanal transluzent oder opak verfüllt ist.

In manchen Fällen ist es wünschenswert, einige Perforationen ohne oder nur mit minimaler Verfärbung auszubilden und andere Perforationen durch gezielte Wahl der Prozessparameter, beispielsweise über eine Einleiten eines Prozessgases während der Ausbildung, mit einer stärkeren Verfärbung auszubilden.

Unerwünschte Verfärbungen lassen sich durch einen Reinigungsschritt beispielsweise zum Beispiel mittels Isopropanol oder anderer Lösungsmittel entfernen.

Ein durch ein Muster der Vielzahl von Mikroperforationen eingebrachter Informationsgehalt, der im Durchlicht wahrnehmbar ist, kann sich von einem Informationsgehalt unterscheiden, der über ein Muster einer Teilmenge der Vielzahl von Perforationen gebildet ist, deren Ränder (Öffnungen) und/oder deren Kanäle eine Verfärbung aufweisen. Dieses ist dann möglich, wenn die Vielzahl der Mikroperforationen "eingefärbte" und "nicht eingefärbte" Mikroperforationen oder unterschiedlich "eingefärbte" Mikroperforationen umfasst. Werden beispielsweise in eine mittelgraue opake Substratschicht Mikroperforationen eingebracht, die keine oder eine geringe Verfärbung aufweisen, so sind diese bei einer Betrachtung in Draufsicht nicht zu erkennen. Andere Mikroperforationen werden zusätzlich eingebracht, die eine starke Einfärbung zumindest der Eintrittsöffnung zeigen, in die die die Mikroperforation ausbildende Laserstrahlung beim Perforationsvorgang eingetreten ist. Diese eine starke Verfärbung, beispielsweise Schwärzung, zeigenden Mikroperforationen sind auch in Draufsicht vor dem mittelgrauen "Hintergrund" der opaken Schicht zu erkennen. In Draufsicht und in Durchsicht sind somit unterschiedliche Muster erkennbar.

Alternativ oder in Kombination ist es möglich einzelne der Mikroperforationen mit einer transluzenten Drucklage zu verdecken.

Bei einer Ausführungsform ist vorgesehen, dass eine der weiteren Substratschichten als für eine Lasermarkierung geeignete Substratschicht bereitgestellt oder hergestellt wird und so mit der mindestens einen opaken Substratschicht zusammengeführt wird, dass diese zwischen einer Oberseite des gebildeten Verbundkörpers und der einen Drucklage oder den mehreren Drucklagen, welche Mikroperforationen bei einer Betrachtung in Reflexion durch die Oberseite verdecken, und/oder zwischen einem verfärbten Rand einer Mikroperforation und der Oberseite, über die der verfärbte Rand in Draufsicht durch die Oberseite sichtbar ist, oder alternativ zwischen einer Unterseite des gebildeten Verbundkörpers und der einen Drucklage oder den mehreren Drucklagen, welche Mikroperforationen bei einer Betrachtung in Reflexion durch die Unterseite verdecken, und/oder zwischen einem verfärbten Rand einer Mikroperforation und der Unterseite, über die der verfärbte Rand in Draufsicht durch die Unterseite sichtbar ist, und eine Lasermarkierung in der für die Lasermarkierung geeigneten Substratschicht vorgenommen wird.

Bei einer Ausführungsform eines flachen Verbundkörpers ist somit vorgesehen, dass Lasermarkierungen im Innern des Verbundkörpers ausgebildet sind, welche in Reflexion durch die Oberseite und oder durch die Unterseite gemeinsam mit der oder den Mikroperforationen verdeckenden Drucklagen und/der gemeinsam mit der Verfärbung mindestens eines Rands einer Öffnung einer der Mikroperforationen, welche nicht transluzent verdeckt oder verfüllt ist, beobachtbar ist.

Es versteht sich, dass der Verbundkörper, der als Sicherheitsdokument oder für dessen Herstellung genutzt werden soll, eine Vielzahl weiterer Sicherheitsmerkmale aufweisen kann. Beispielsweise kann in den Verbundkörper ein Mikroprozessor im Innern integriert werden, der die Struktur des monolithischen Verbundkörpers nicht beeinträchtigt oder in die Oberfläche eine Struktur, beispielsweise ein Flächenhologramm, eingeprägt werden, dessen Erzeugung nicht über die Mikroperforationen im Innern erfolgt.

Nachfolgend wird die Erfindung anhand bevorzugter Ausführungsbeispiele unter Bezugnahme auf eine Zeichnung näher erläutert. Hierbei zeigt:
- Fig. 1: ein schematisches Ablaufdiagramm eines Verfahrens zum Herstellen eines Verbundkörpers;
- Fig. 2: eine schematische Schnittzeichnung durch eine erste Ausführungsform eines Verbundkörpers;
- Fig. 3: eine Schnittansicht durch einen Verbundkörper einer anderen Ausführungsform; und
- Fig. 4: eine schematische Draufsicht auf einen Verbundkörper mit einer innenliegenden Mikroperforation.
- Fig. 5: eine schematische Schnittzeichnung einer weiteren Ausführungsform eines Verbundkörpers mit zwei opaken Materialschichten;
- Fig. 6: eine weitere schematische Schnittdarstellung einer Ausführungsform mit zwei opaken Materialschichten sowie einer dazwischen angeordneten zusätzlichen transluzenten Materialschicht;
- Fig. 7: eine schematische Schnittansicht durch einen Verbundkörper, bei dem die Perforationen in zwei unterschiedlichen opaken Materialschichten lateral gegeneinander versetzt sind und zwischen den Materialschichten eine zusätzliche transluzente Materialschicht ausgebildet ist;
- Fig. 8a: eine schematische Schnittansicht einer weiteren Ausführungsform eines Verbundkörpers;
- Fig. 8b, 8c: schematische Schnittansichten zur Verdeutlichung einer Verifikation in Durchsicht über die Oberseite (Fig. 8b) und eine Unterseite (Fig. 8c) des Verbundkörpers nach Fig. 8a);
- Fig. 9a: eine schematische Schnittansicht einer Ausführungsform eines flachen Verbundkörpers, bei dem die Mikroperforierungen Verfärbungen aufweisen;
- Fig. 9b, 9c: schematische Schnittansichten zur Verdeutlichung einer Verifikation in Draufsicht über die Oberseite (Fig. 9b) und in Durchsicht über die Oberseite (Fig. 9c) des Verbundkörpers nach Fig. 9a);
- Fig. 10a: eine schematische Schnittansicht einer anderen Ausführungsform eines flachen Verbundkörpers, bei dem die Mikroperforierungen Verfärbungen aufweisen, welche nachträglich mittels einer aufgebrachten Zubereitung erzeugt sind;
- Fig. 10b, 10c: schematische Schnittansichten zur Verdeutlichung einer Verifikation in Draufsicht über die Oberseite (Fig. 10b) und in Durchsicht über die Oberseite (Fig. 10c) des Verbundkörpers nach Fig. 10a);
- Fig. 11a: eine schematische Schnittansicht einer weiteren Ausführungsform eines flachen Verbundkörpers, bei dem die Mikroperforierungen Verfärbungen aufweisen und zusätzlich eine Lasermarkierung in dem flachen Verbundkörper ausgebildet ist;
- Fig. 11b, 11c: schematische Schnittansichten zur Verdeutlichung einer Verifikation in Draufsicht über die Oberseite (Fig. 11b) und in Durchsicht über die Oberseite (Fig. 11c) des Verbundkörpers nach Fig. 11a

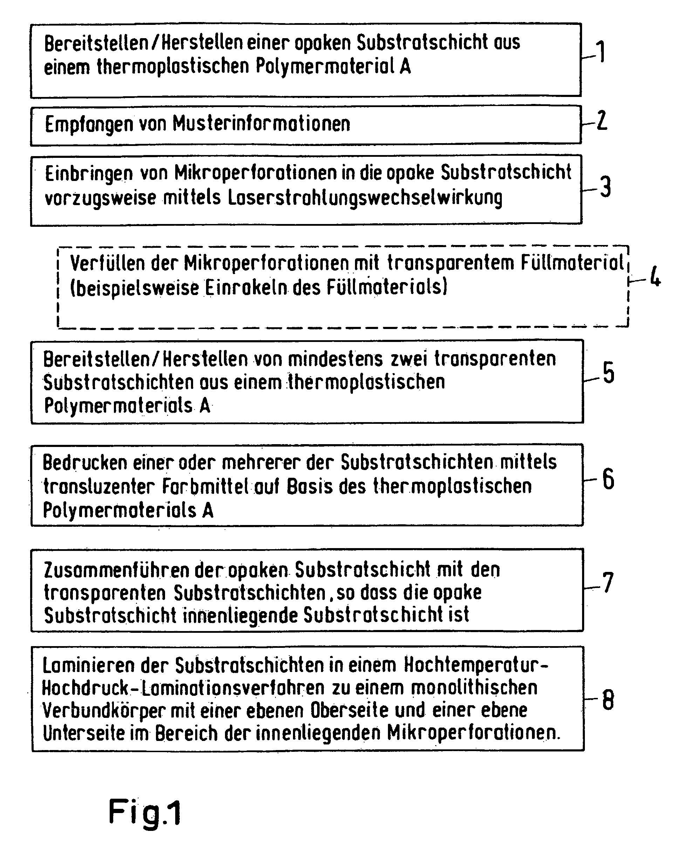

In Fig. 1 ist ein schematisches Ablaufdiagramm für ein Verfahren zum Herstellen eines Verbundkörpers dargestellt. Zunächst wird eine opake Substratschicht auf Basis eines thermoplastischen Polymermaterials, welches hier aus Vereinfachungsgründen mit A bezeichnet ist, hergestellt oder ein auf Basis dieses thermoplastischen Polymermaterials A hergestellte Substratschicht bereitgestellt 1. Musterinformationen, welche ein Perforationsmuster festlegen, welches in dem herzustellenden Verbundkörper ausgebildet werden soll, werden empfangen 2. In die opake Substratschicht werden Mikroperforationen gemäß den Musterinformationen eingebracht 3. Dieses erfolgt vorzugsweise mittels Laserstrahlungswechselwirkung. Die einzelnen Mikroperforationen durchdringen hierbei die opake Substratschicht vollständig und weisen in der Regel einen kreisförmigen oder elliptischen Querschnitt quer zu einer Längsachse auf, entlang derer die Mikroperforationen das Substrat durchdringen. Die einzelnen Mikroperforationen können in einem Raster angeordnet sein, so dass die einzelnen Mikroperforationen, d.h. die einzelnen Durchgangsöffnungen, voneinander zumindest parallel zu einer Raumrichtung denselben Abstand und gegebenenfalls auch parallel zu einer zweiten, orthogonal zu der einen Raumrichtungen orientierten Raumrichtung jeweils einen äquidistanten Abstand aufweisen. Ebenso ist es möglich, die Durchmesser bzw. Querschnittsformen der einzelnen Mikroperforationen zu variieren, um eine gewünschte grafische Information mit dem Perforationsmuster zu speichern. Entlang der Durchdringung der opaken Substratschicht weisen die dadurch gebildeten Mikrokanäle vorzugsweise einen rechteckigen Querschnitt oder trapezartigen Querschnitt auf.

Bei einigen Ausführungsformen werden die so hergestellten Mikroperforationen mit transparentem Füllmaterial beispielsweise auf Basis des thermoplastischen Polymermaterials A, verfüllt. Dies kann beispielsweise über ein Einrakeln eines verflüssigten Polymermaterials verfolgen. Ebenso können aber auch bestimmte Druckverfahren, insbesondere Siebdruck oder Tintenstrahldruck eingesetzt werden. Auch ein Tauchen der Substratschicht ist denkbar. A wird hier erneut als Platzhalter für ein thermoplastisches Polymermaterial verwendet. Beispielsweise kann als Polymermaterial A Polycarbonat verwendet werden. Es kann auch ein anderes transparentes Material oder transluzentes Material als Füllmaterial verwendet werden.

Zusätzlich zu der opaken Substratschicht werden mindestens zwei transparente oder transluzente Substratschichten (oder mindestens eine transparente und eine transluzente Substratschicht) auf Basis desselben thermoplastischen Polymermaterials A hergestellt bzw. transparente und/oder transluzente Substratschichten, welche auf Basis desselben thermoplastischen Polymermaterials A hergestellt sind, bereitgestellt 5.

Bei einigen Ausführungsformen werden einzelne der Substratschichtoberflächen mittels transluzenter Farbzusammensetzungen flächig bedruckt 6. Hierbei werden vorzugsweise solche Oberflächen bedruckt, welche später im fertigen Verbundkörper innenliegende Ebenen bilden. Das Bedrucken erfolgt vorzugsweise so, dass im fertigen Verbundkörper Öffnungen der Mikroperforationen für eine Betrachtung in Reflexion des Verbundkörpers verdeckt sind. Hierbei können Oberflächen der transparenten Substratschichten bedruckt werden. Die Verfüllung von Öffnungen spielt für die Maskierung keine Rolle. Es kann auch die opake Substratschicht selbst bedruckt werden, wobei jedoch eine Maskierung (Verdeckung) der Mikroperforationen gegenüber einer Betrachtung im Auflicht nur in dem Fall möglich ist, in dem die Mikroperforationen verfüllt sind. Das Bedrucken kann in den einschlägig bekannten Verfahren des Durch-, Tief, Hoch und Flachdrucks erfolgen wie beispielsweise Siebdruck, Rastertiefdruck, Stichtiefdruck, Letterset und Offset. Auch Tintenstrahldruck, sogenannter Ink-Jet-Druck, ist möglich, sofern die Farbzusammensetzungen dies zulassen.

Bei einem weiteren Verfahrensschritt wird die opake Substratschicht mit den transparenten Substratschichten so zusammengeführt, dass die opake Substratschicht eine innenliegende Substratschicht ist 7. Abschließend werden die Substratschichten in einem Hochtemperatur-Hochdruck-Laminationsverfahren zu einem monolithischen Verbundkörper mit einer ebenen Oberseite und einer ebenen Unterseite im Bereich der innenliegenden Mikroperforationen zusammengefügt 8. Das Ausbilden eines monolithischen Verbundkörpers bedeutet, dass an den ursprünglichen Grenzflächen, an denen die unterschiedlichen Substratschichten zusammengefügt sind, im fertigen Verbundkörper kein Phasenübergang hinsichtlich der Polymerstruktur in dem Verbundkörper zu beobachten ist. Die sich ergebenden Materialschichten in dem Verbundkörper unterscheiden sich jedoch beispielsweise durch Zusatzstoffe, beispielsweise ein Titanweiß, welches z. B. die optische Eigenschaft der opaken Substratschicht beeinflusst.

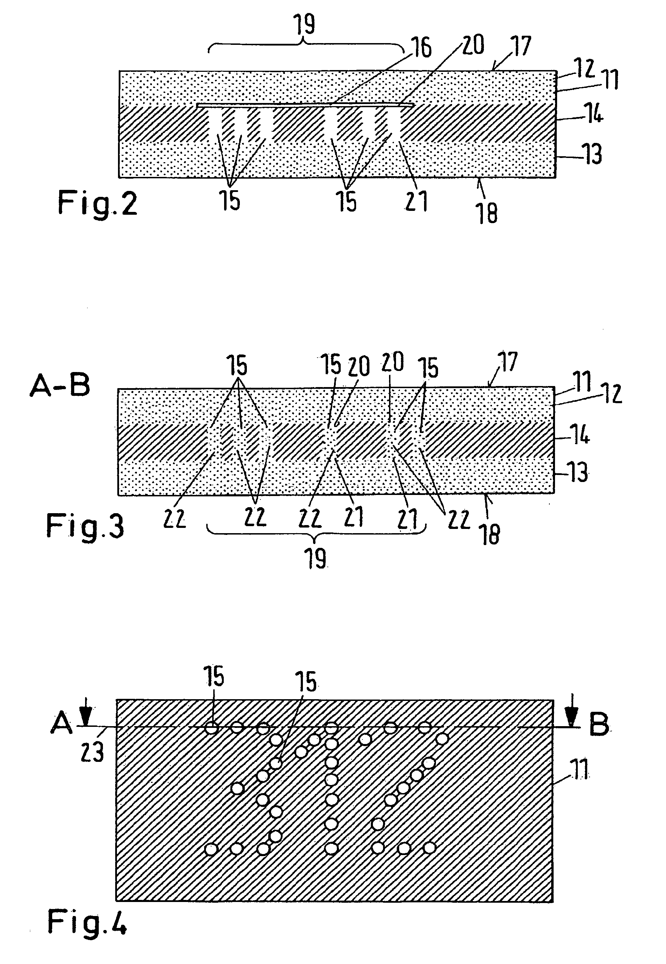

In Fig. 2 ist schematisch ein Querschnitt durch eine Ausführungsform eines Verbundkörpers 11 gezeigt. Der Verbundkörper umfasst außenliegende transparente Materialschichten 12, 13 und eine innenliegende opak ausgebildete Materialschicht 14, in der Mikroperforationen 15 ausgebildet sind. Zusätzlich umfasst der Verbundkörper 11 eine transluzente Farblage 16, welche eine Wahrnehmung der Mikroperforationen 15 bei einer Betrachtung durch die Oberseite 17 bei einer Betrachtung in Reflexion verhindert. Sowohl die Oberseite 17 als auch eine Unterseite 18 des Verbundkörpers 11 sind auch im Bereich 19 der innenliegenden Mikroperforation 15 flach und eben ausgebildet. Die Mikroperforationen weisen jeweils der Oberseite 17 zugewandte Öffnungen 20 und der Unterseite 18 zugewandte Öffnungen 21 auf.

In Fig. 3 ist ein ähnlicher Verbundkörper 11' gezeigt. Gleiche technische Merkmale tragen in allen Figuren identische Bezugszeichen. Die Ausführungsform unterscheidet sich dadurch, dass bei dieser Ausführungsform keine Farblage vorhanden ist und zusätzlich die Mikroperforationen mit einem transparenten Füllmaterial 22 gefüllt sind.

In Fig. 4 ist eine schematische Ansicht bei einer Durchlichtbetrachtung des Dokumentkörpers nach Fig. 3 dargestellt, wobei die Schnittlinie 23 der Ansicht der Fig. 3 eingezeichnet ist. Im dargestellten Ausführungsbeispiel stellen die Mikroperforationen 15 ein Perforationsmuster 24 dar, welches die Zahlenfolge 3-1-2 in dem Verbundkörper 11 speichert.

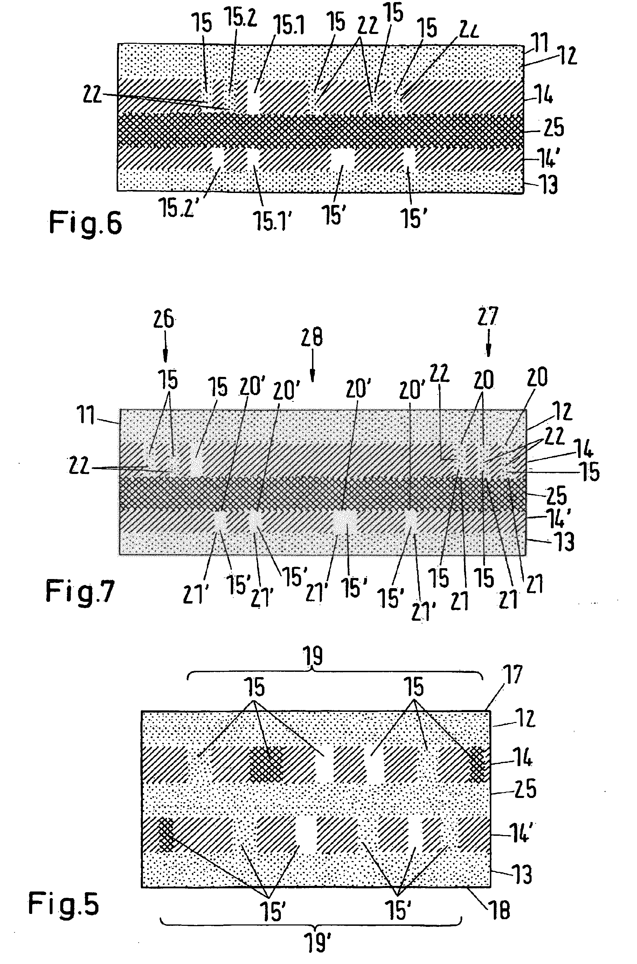

In Fig. 5 ist schematisch ein Querschnitt durch einen Verbundkörper gezeigt, der zusätzlich zu der opaken Materialschicht 14 mit den Mikroperforationen 15 eine weitere opake Materialschicht 14' umfasst, die mit weiteren Mikroperforationen 15' versehen ist. Zwischen der opaken Materialschicht 14 und der weiteren opaken Materialschicht 14' ist eine zusätzliche Materialschicht 25 angeordnet, welche in der dargestellten Ausführungsform transparent ist. In anderen Ausführungsformen kann die zusätzliche Transparentschicht 25 auch transluzent ausgebildet sein, eine transluzente zusätzliche Materialschicht begünstigt eine Lichtstreuung im Bereich der zusätzlichen Materialschicht 25, sodass entlang einer lateralen Ausdehnung der zusätzlichen Materialschicht durch die Mikroperforationen 15 bzw. weitere Mikroperforationen 15' eintretendes Licht lateral versetzt durch die weiteren Mikroperforationen 15' bzw. Mikroperforationen 15 vereinfacht austreten kann. Zu erkennen ist, dass die Mikroperforationen und weiteren Mikroperforationen unterschiedliche geometrische Formen annehmen können. Ebenso ist zu erkennen, dass einige Mikroperforationen unbefüllt (weiß dargestellt) oder gefüllt (mit einem Punktmuster versehen) sein. Das Punktmuster kennzeichnet transparentes Material, eine gekreuzte Schraffur ein transluzentes Material und eine schräg verlaufende Schraffur opakes Material. Leerräume sind weiß, diese können gasbefüllt sein.

In Fig. 6 ist eine weitere Ausführungsform eines Verbundkörpers schematisch als Schnittzeichnung dargestellt, der ebenfalls eine opake Materialschicht 14 sowie eine weitere opake Materialschicht 14' umfasst, wobei zwischen der opaken Materialschicht 14 und der weiteren opaken Materialschicht 14' eine transluzente zusätzliche Materialschicht 25 angeordnet. Sowohl das durch die Mikroperforationen 15 gebildete Perforationsmuster als auch das weitere durch die weiteren Perforationen gebildete Perforationsmuster sind bei dieser Ausführungsform bei einer Betrachtung im Durchlicht wahrnehmbar. Welches der Muster, das Perforationsmuster oder das weitere Perforationsmuster wahrnehmbar ist, hängt davon ab, ob der Verbundkörper von der Oberseite 17 oder der Unterseite 18 betrachtet wird. Wird der Verbundkörper von der Unterseite 18 her beleuchtet und von der Oberseite 17 her betrachtet, so ist das durch die Perforationen 15 gebildete Perforationsmuster wahrnehmbar. Wird hingegen der Verbundkörper 11 von der Unterseite 18 aus betrachtet und von der Oberseite 17 aus beleuchtet, so ist das weitere Perforationsmuster, welches durch die weiteren Perforationen 15' in der weiteren opaken Materialschicht 14' gebildet ist, wahrnehmbar. Wesentlich ist, dass die Perforationen und weiteren Perforationen bezüglich einer Betrachtungsrichtung nicht fluchtend ausgerichtet sein müssen. Sind einzelne Perforationen fluchtend ausgerichtet, beispielsweise die Perforationen 15.1 und 15.1', so erscheinen diese bei einer Betrachtung im Durchlicht heller als gegeneinander versetzte Perforationen, beispielsweise die Perforationen 15.2 und 15.2'. Hierdurch können unterschiedlich hell wahrgenommene Perforationen in einem Perforationsmuster erzeugt werden, bei dem die einzelnen Perforationskanäle einen einheitlichen Querschnitt und eine einheitliche Größe aufweisen. Es ergibt sich für den Fachmann, dass hier vielfältige Kombinationen möglich sind. Auch durch eine Anzahl der dem betrachteten Perforationsmuster gegenüberliegenden Perforationen kann eine Helligkeit beeinflussen. Ferner wird die Helligkeit über eine Größe, Form der Mikroperforationen beeinflusst.

In Fig. 7 ist eine weitere Ausführungsform schematisch als Schnittzeichnung dargestellt. Bei dieser sind das Perforationsmuster, welches durch die Perforationen 15 in der opaken Materialschicht 14 gebildet ist und das weitere Perforationsmuster, welches durch die weiteren Perforationen 15' in der weiteren opaken Materialschicht 14' ausgebildet ist, so beschaffen, dass die Perforationen 15, 15' lateral deutlich gegeneinander versetzt sind. Über die transluzente zusätzliche Materialschicht 25 zwischen der opaken Materialschicht 14 und der weiteren opaken Materialschicht 14' ermöglicht es jedoch, dass beispielsweise durch die Perforationen 15 in der opaken Materialschicht 14 durchtretendes Licht diffus reflektiert wird, sodass bei einer Durchlichtbetrachtung das durch die weiteren Perforationen 15' in der weiteren opaken Materialschicht 14 ausgebildete Perforationsmuster sichtbar wird. Dies ist jedoch bei einer Ausführungsform nur dann möglich, wenn die Beleuchtung mit intensivem, fokussiertem Licht in dem Bereich erfolgt, in dem die Perforationen 15 des Perforationsmusters ausgebildet sind. Zumindest eine Schwankung der wahrnehmbaren Intensität ist beobachtbar, abhängig von der Position der Einstrahlung von Licht mit einer intensiven Lichtquelle durch die Oberseite 17 während einer Betrachtung durch die Unterseite 18. Bei einer Einstrahlung an den Positionen 26, 27 ist das weitere Perforationsmuster der Perforationen 15' heller wahrzunehmen, als bei Einstrahlung von Licht an der Position 28.

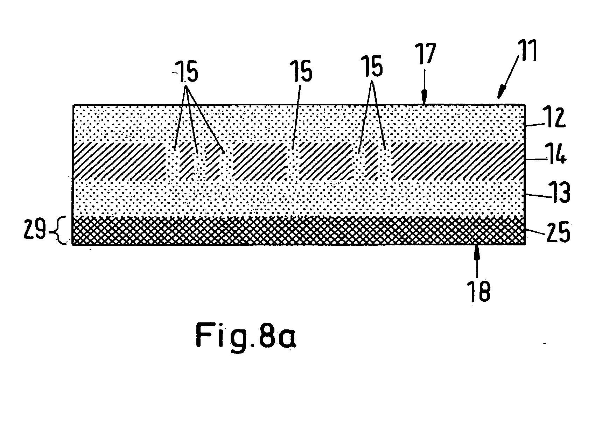

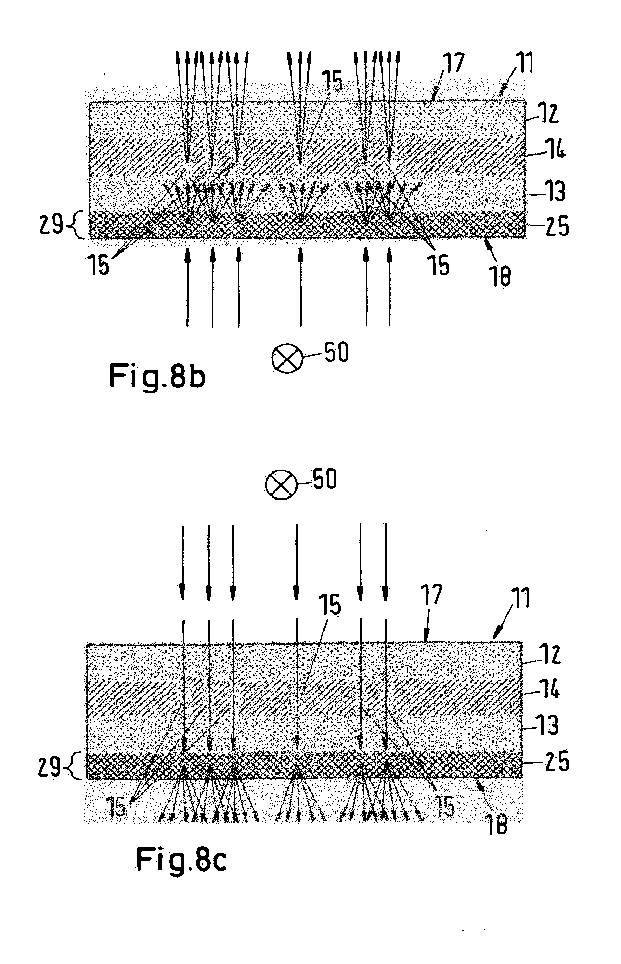

In Fig. 8a ist eine weitere Ausführungsform eines Verbundkörpers 11 dargestellt, bei der in einer opaken Materialschicht 14 erneut Mikroperforationen 15 ausgebildet sind. Diese ist zwischen zwei transparenten Materialschichten 12, 13 ausgebildet. Zusätzlich umfasst der Verbundkörper eine transluzent ausgebildete zusätzliche Materialschicht 25, die an die transparente Materialschicht 13 angrenzt, so dass diese Materialschicht 13 zwischen der opaken Materialschicht 14 und der zusätzlichen Materialschicht 25 angeordnet ist. Eine zusätzliche transluzente Schicht kann dazu führen, dass - je nach Stärke der Streuung in der transluzenten Schicht - zum Betrachten des Merkmals eine intensive Lichtquelle (Tischlampe) benötigt wird. Bei einer stark streuenden transluzenten Schicht reicht das im Raum vorhandene Streulicht meistens nicht aus, um eine Durchlichtwahrnehmung durch einen menschlichen Beobachter zu ermöglichen. Bei einer Betrachtung des Verbundkörpers 11 im Durchlicht durch eine Oberseite 17, welche mit einer Oberfläche der Materialschicht 12 zusammenfällt, ist mit einer Beleuchtung einer Lichtquelle 50 durch die Unterseite 18 des Verbundkörpers 11 ein durch die Mikroperforationen 15 gegebenes Muster deutlich zu erkennen. Dieses ist in Fig. 8b angedeutet. Im Raum vorhandenes Streulicht reicht in meisten Fällen aus, um eine Durchlichtwahrnehmung durch einen menschlichen Beobachter zu ermöglichen.

Bei einer Betrachtung im Durchlicht durch die Unterseite 18 ist bei geeignet gewählter Schichtstärke 29 der zusätzlichen Substratschicht 25 das Muster nur zuerkennen, wenn eine intensive Lichtquelle 50 zur Beleuchtung der Oberseite 17 verwendet wird. Ohne eine solche zusätzliche Beleuchtung ist das Muster der Mikroperforationen 15 auch bei einer Betrachtung im Durchlicht nicht möglich. Diese Situation ist in Fig. 8c angedeutet. Darüber hinaus wird das Muster bei einer Betrachtung im Durchlicht durch die Unterseite 18, wenn überhaupt, "unschärfer" wahrgenommen. Die transluzente Schicht 25 kann auch bei einer anderen Ausführungsform durch eine transluzente Drucklage ersetzt, sein um denselben Effekt zu erzielen.

Der Verbundkörper 11 weist somit bei der Betrachtung im Durchlicht durch die Oberseite 17 und die Unterseite 18 unterschiedliche Eigenschaften auf. Wird zusätzlich noch eine weitere transparente äußere Materialschicht verwendet, die an der Unterseite angeordnet ist und die Mikroperforation von der Oberseite aus durch einen transluzenten Druck maskiert und auf gleiche Weise die transluzente Materialschicht durch einen identischen transluzenten Druck gegenüber einer Betrachtung durch die Unterseite maskiert, so erhält man einen scheinbar symmetrischen Verbundköper, der hinsichtlich der Verifikation jedoch eine ausgeprägte Seitenabhängigkeit aufweist.

Andere Ausführungsformen können vorsehen, dass das Füllmaterial oder eine oder mehrere der Substratschichten Lumineszenzstoffe umfassen. Mittels einer Anregung kann somit eine Erzeugung von elektromagnetischer Strahlung, insbesondere im sichtbaren Wellenlängenbereich in dem Dokument erzeugt und für eine Verifikation des mit den Mikroperforationen gebildeten Sicherheitsmerkmals verwendet werden. Ebenso können Lichtquellen beispielsweise in Form von Lumineszenzstoffen, organischen Leuchtdioden (OLED) oder eines Displays in den Verbundkörper integriert werden, solange die monolithische Struktur des Verbundkörpers hinsichtlich der Polymerstruktur nicht beeinträchtigt wird.

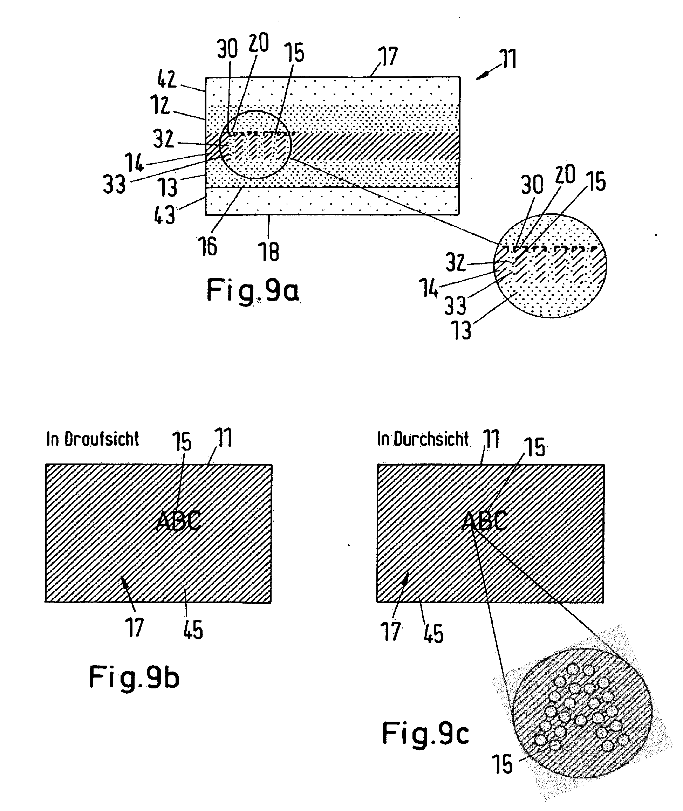

In Fig. 9a ist eine Ausführungsform eines weiteren flachen Verbundkörpers 11 schematisch als Schnittdarstellung gezeigt. Bei dieser Ausführungsform sind die Mikroperforierungen in die opake Materialschicht 14 so eingebracht, dass zumindest ein Rand 30 der Öffnungen 20 der Mikroperforationen 15 verfärbt, vorzugsweise geschwärzt ist. Es ist jeweils der Rand 30 jener Seite 31 der opaken Materialschicht 14 verfärbt, auf welche eine Laserstrahlung zum Erzeugen der Mikroperforationen gerichtet wurde. Bei einigen Ausführungsformen ist zusätzlich auch eine innere Wandung 32 der durch die Mikroperforationen 15 gebildeten Kanäle 33 verfärbt. Eine Einfärbung kann durch die Wahl der Gaszusammensetzung bei der Erzeugung der Mikroperforationen 15 mit einem Laser und durch eine Wahl der Pulsenergie und Plusdauer beeinflusst werden.

Sind die Verfärbungen unerwünscht, kann ein Reinigungsschritt unter Verwendung von beispielsweise Isopropanol ausgeführt werden.

Der flache Verbundkörper 11 umfasst neben der opaken Schicht 14 zu einer Oberseite 17 hin, ausgehend von der opaken Materialschicht 14, eine transparente Schicht 12 sowie eine weitere transparente Materialschicht 42. Ausgehend von der opaken Materialschicht 14 folgen zur Unterseite 18 hin eine transparente Materialschicht 13 sowie weitere transparente Materialschicht 43. Zwischen der transparenten Materialschicht 13 und der weiteren transparenten Materialschicht 43 ist eine transluzente Drucklage 16 ausgebildet, welche die Mikroperforationen 15 hinsichtlich einer Betrachtung in Reflexion über die Unterseite 18 des Verbundkörpers 11 verdeckt. Anstelle der Drucklage 16 können auch mehrere transluzente Drucklagen ausgebildet sein. Es können somit farbig oder bunt beliebige Informationen gedruckt sein.

Bei der in Fig. 9a dargestellten Ausführungsform sind die Mikroperforationen 15 in einem Muster angeordnet, so dass diese die Konturen des Schriftzuges "ABC" in einem regelmäßigen Raster ausfüllen. In Fig. 9 b ist eine sich ergebende Ansicht einer Betrachtung in Reflexion, d.h. in Draufsicht, zur Verifikation des Verbundkörpers 11 schematisch gezeigt. Aufgrund der Verfärbungen der Ränder der Mikroperforationen (welche hier nicht aufgelöst werden) hebt sich der Schriftzug "ABC" vor dem durch die opake Materialschicht gebildeten Hintergrund 45 ab.

Bei einer Betrachtung in Durchsicht ergibt sich eine Ansicht, wie sie schematisch in Fig. 9c gezeigt ist. Ein Gebiet des Buchstaben "A" ist in einer Vergrößerung gezeigt. Hierbei ist deutlich zu erkennen, dass durch die Mikroperforationen, trotz der transluzenten Drucklage (vergleiche Fig. 9a) ein Lichtdurchtritt zu erkennen ist. Die transluzente Drucklage verhindert eine Wahrnehmung der Perforationen als Öffnungen in der opaken Schicht bei der Betrachtung in Reflexion, wie es in Fig. 9b gezeigt ist. Hierbei wird davon ausgegangen, dass eine Beleuchtung hauptsächlich über die Oberseite 17 erfolgt und nur Streulicht aus der Umgebung auf die Unterseite 18 trifft. Bei der Betrachtung im Durchlicht ist dieses anders. Hier erfolgt eine gezielte Beleuchtung der Unterseite 18 oder es erfolgt die Betrachtung vor einem hellen Hintergrund ohne eine Beleuchtung der Oberseite 17.

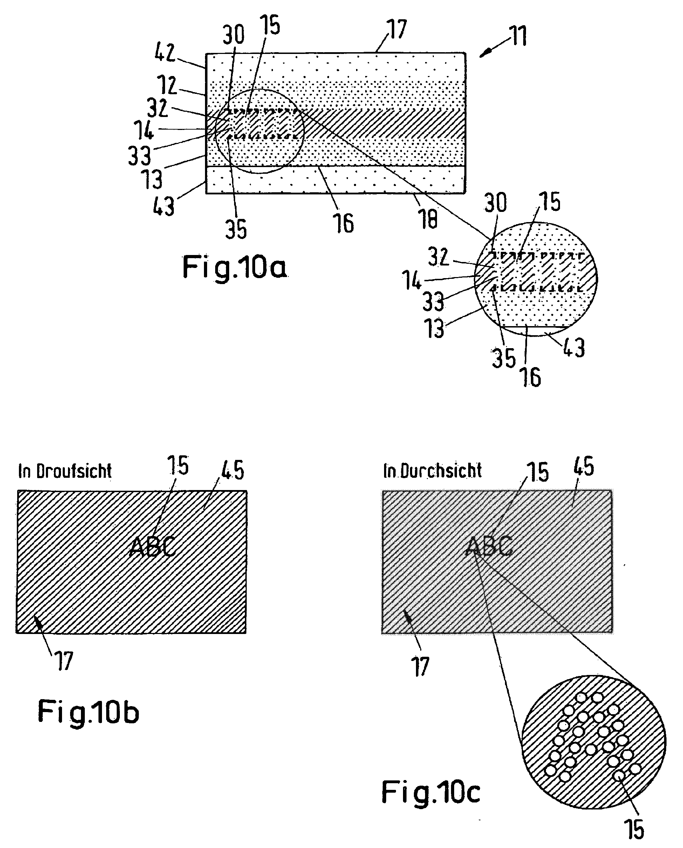

In Fig. 10a bis 10c sind schematisch eine ähnliche Ausführungsform eines flachen Verbundkörpers 11 (Fig. 10a) sowie deren Ansicht in Draufsicht (Fig. 10b) und deren Ansicht in Durchsicht (Fig. 10c) gezeigt. Die Ausführungsform nach Fig. 10a bis 10c unterscheidet sich von der nach Fig. 9a bis 9c dadurch, dass die Ränder 30 der Seite 31 sowie Ränder 35 an einer entgegengesetzten Seite 36 der opaken Materialschicht 14 verfärbt sind. Die Verfärbung ist über ein gezieltes Aufbringen einer Zubereitung, beispielsweise mittels eines Druckverfahrens vorgenommen, welche aufgrund von Kapillarkräften neben den Rändern 30, 35 auch jeweils einen Teil der inneren Wandung 32 verfärbt hat. Die Mikroperforationen 15 sind jedoch weder transluzent noch opak verfüllt.

Bei dieser Ausführungsform sind Zubereitungen auf die Seite 31 und die entgegengesetzte Seite 36 der opaken Materialschicht 14 aufgebracht. Bei anderen Ausführungsformen kann eine Zubereitung verwendet werden, die bei einem gezielten Aufbringen beispielsweise auf die Seite 31 sowohl den Rand 30, die innere Wandung 32, den Rand 35 auf der entgegengesetzten Seite 36 sowie gegebenenfalls kleine Umgebungen um die Ränder 30, 35 einfärbt.

Hinsichtlich der Verifikation gleichen sich die Ausführungsformen nach Fig. 9a bis 9c und 10a bis 10c.

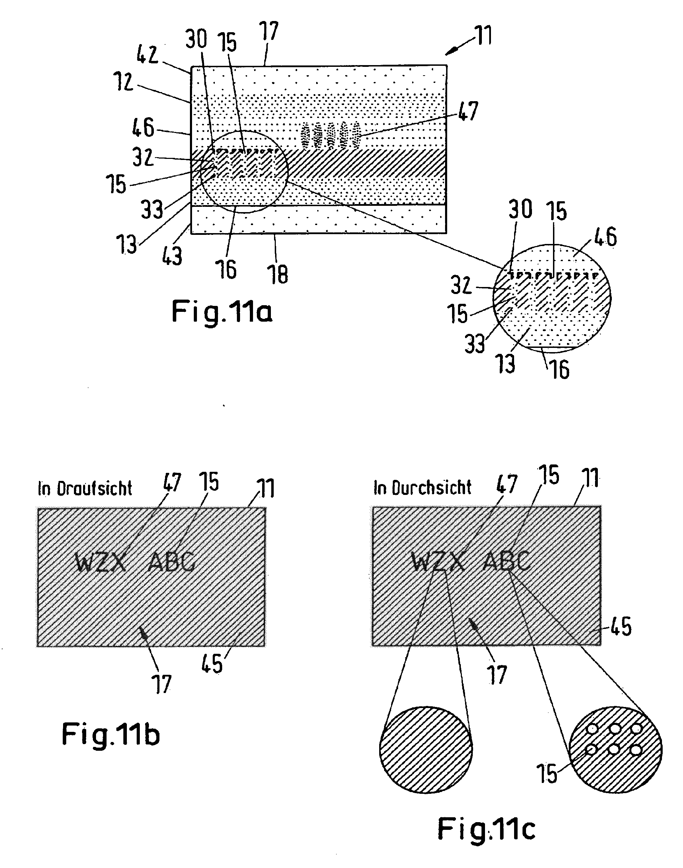

In Fig. 11a bis 11c sind eine weitere Ausführungsform eines flachen Verbundkörpers sowie entsprechende Ansichten zur Verifikation gezeigt. Die Ausführungsform nach Fig. 11 a unterscheidet sich von der nach 9a dadurch, dass zwischen der opaken Materialschicht 14 und der transparenten Materialschicht 12 eine sogenannte "laserfähige" transparente Materialschicht 46 eingefügt ist. Eine laserfähige Schicht enthält Photosensibilisatoren, welche eine Transparenz nicht oder nur unmerklich einschränken, jedoch eine Absorption von eingestrahltem fokussierten Laserlicht zum Ausbilden von Lasermarkierungen 47 begünstigen. Bei der Ausführungsform nach Fig. 11 a ist mittels der Lasermarkierungen 47, welche beispielsweise lokale Carbonisierungen der laserfähigen Materialschicht 46 sind, ein Schriftzug "WZX" eingebracht. In Draufsicht bzw. bei einer Betrachtung in Reflexion sind der über die verfärbten Ränder 30 der Mikroperforationen 15 ausgebildete Schriftzug "ABC" und der mittels der Lasermarkierungen 46 ausgebildete Schriftzug "WZX" nicht oder zumindest nicht ohne weiteres zu unterscheiden. Diese ist in Fig. 11b angedeutet.

Wie in Fig. 11c gezeigt ist in Durchsicht in den Schriftzeichen "ABC" ein Lichtdurchtritt zu erkennen, wie durch die Vergrößerung angedeutet ist, im Schriftzug "WZX", der mittels er Lasermarkierung ausgebildet ist, hingegen nicht. Hierdurch lassen sich somit neuartige Sicherheitsmerkmale ausbilden, die diesen Unterschied ausnutzen.

Es versteht sich, dass nur beispielhafte Ausführungsformen beschrieben sind. Die einzelnen Merkmale der unterschiedlichen Ausführungsformen können beliebig miteinander kombiniert werden, um die Erfindung umzusetzen. Es können auch mehr als zwei transparente Materialschichten verwendet werden.

### Bezugszeichenliste

- 1 - 8: Verfahrensschritte
- 11: Verbundkörper
- 12, 13: transparente Materialschichten
- 14: opake Materialschicht
- 14': weitere opake Materialschicht
- 15: Mikroperforationen
- 15': weitere Mikroperforation
- 16: Drucklage
- 17: Oberseite
- 18: Unterseite
- 19, 19': Bereich
- 20, 20': Öffnung
- 21, 21': Öffnung
- 22: Füllmaterial
- 23: Schnittlinie
- 24: Perforationsmuster
- 25: zusätzliche Materialschicht
- 26,27: Position
- 28: weitere Position
- 29: Schichtstärke
- 30: Rand
- 31: Seite (einer opaken Materialschicht)
- 32: innere Wandung
- 33: Kanäle
- 35: Rand
- 36: entgegengesetzte Seite (zu Seite 31)
- 42, 43: weitere transparente Materialschicht
- 46: laserfähige Materialschicht
- 47: Lasermarkierung

## Patentansprüche

1. Verfahren zum Herstellen eines Verbundkörpers (11) mit einem innen liegenden Sicherheitsmerkmal umfassend die Schritte:
Bereitstellen mindestens einer opaken Substratschicht;
Einbringen von Mikroperforationen (15) in die mindestens eine opake Substratschicht ;
Bereitstellen von mindestens zwei weiteren transparenten und/oder transluzenten Substratschichten; Zusammenführen der mindestens einen opaken Substratschicht mit den mindestens zwei weiteren Substratschichten, so dass die mindestens eine opake Substratschicht zwischen den mindestens zwei weiteren Substratschichten angeordnet ist,
**dadurch gekennzeichnet, dass**
die bereitgestellte mindestens eine opake Substratschicht und die bereitgestellten mindestens zwei weiteren Substratschichten so ausgewählt oder hergestellt werden, dass diese auf Basis desselben thermoplastischen Polymermaterials ausgebildet sind, und die zusammengeführten Substratschichten in einem Hochtemperatur-Hochdruck-Laminationsverfahren zu dem Verbundkörper (11) zusammengefügt werden, so dass dieser monolithisch ausgebildet wird und wobei eine Oberseite (17) und eine ebene Unterseite (18) des Verbundkörpers (11) zumindest im Bereich (19) der innen liegenden Mikroperforationen (15) eben ausgebildet werden.

2. Verfahren nach Anspruch 1, **dadurch gekennzeichnet, dass** mindestens eine weitere opake Substratschicht bereitgestellt und in die mindestens eine weitere opake Substratschicht weiteren Mikroperforationen (15') eingebracht werden, dass mindestens eine zusätzliche transparente oder transluzente Substratschicht bereitgestellt wird und beim Zusammenführen der mindestens einen opaken Substratschicht mit den mindestens zwei weiteren Substratschichten, die mindestens eine weitere opake Substratschicht und die mindestens eine zusätzliche transparente oder transluzente Substratschicht so angeordnet werden, dass die mindestens eine zusätzliche transparente oder transluzente Substratschicht zwischen der mindestens einen opaken Substratschicht und der mindestens einen weiteren opaken Substratschicht angeordnet ist und die mindestens eine opake Substratschicht und die mindestens eine weitere opake Substratschicht zwischen den mindestens zwei weiteren Substratschichten angeordnet sind.

3. Verfahren nach Anspruch 1 oder 2, **dadurch gekennzeichnet, dass** eine der Substratschichten mit einer oder mehreren transluzenten Farbzusammensetzungen flächig in mindestens einem Bereich bedruckt ist, so dass in dem Verbundkörper (11) eine Vielzahl, vorzugsweise sämtliche, Mikroperforationen (15) durch eine oder mehrere aus der einen oder den mehreren verdruckten transluzenten Farbzusammensetzungen gebildete Drucklage (16) oder gebildeten Drucklagen bei einer Betrachtung in Reflexion verdeckt und durch eine der weiteren transparenten und/oder transluzenten Substratschichten nicht wahrnehmbar ist, jedoch die Mikroperforationen bei Betrachtung in Durchlicht alle wahrnehmbar sind.

4. Verfahren nach Anspruch 3, **dadurch gekennzeichnet, dass** die mindestens eine transluzente Farbzusammensetzung oder die mehreren transluzenten Farbzusammensetzungen auf Basis desselben thermoplastischen Polymermaterials hergestellt werden oder als die mindestens eine transluzente Farbzusammensetzung oder die mehreren Farbzusammensetzungen solche Farbzusammensetzungen ausgewählt werden, die auf Basis desselben thermoplastischen Polymermaterials hergestellt sind wie die Substratschichten.

5. Verfahren nach einem der Ansprüche 1 bis 4, **dadurch gekennzeichnet, dass** die Mikroperforationen (15) in Form von Perforationsmustern (24) eingebracht werden, wobei die nacheinander erzeugten Perforationsmuster (24) unterschiedlich ausgebildet werden, insbesondere um individualisierende oder personalisierende Informationen in den jeweiligen Verbundkörper (11) zu speichern.

6. Verfahren nach einem der Ansprüche 1 bis 5, **dadurch gekennzeichnet, dass** die Mikroperforationen (15) vor dem Zusammenfügen mittels des Hochtemperatur-Hochdruck-Laminationsverfahrens mit einem transparenten Füllmaterial (22) verfüllten werden.

7. Verfahren nach einem der Ansprüche 1 bis 6, **dadurch gekennzeichnet, dass** ein Teil der oder alle Mikroperforationen (15, 15') mit einem Laser so ausgebildet werden, dass ein Rand (30) der Öffnungen der Mikroperforationen an jener Seite (31) der opaken Substratschicht (14), auf die die Laserstrahlung zum Einbringen der Mikroperforationen (15, 15') gerichtet wird, und gegebenenfalls zusätzlich deren innere Wandungen (32) verfärbt werden.

8. Verfahren nach einem der Ansprüche 1 bis 7, **dadurch gekennzeichnet, dass** zumindest auf eine Gruppe der Mikroperforierungen (15) gezielt eine Verfärbungszubereitung aufgedruckt wird, deren Viskosität und/oder Oberflächenspannung so gewählt werden, dass jeweils nur ein Rand (30) der Öffnung der gezielt bedruckten Perforationen (15) und gegebenenfalls zusätzlich die innere Wandung (32) sowie gegebenenfalls ferner zusätzlich ein Rand (35) einer gegenüberliegenden Öffnung der opaken Substratschicht (14) verfärbt wird, jedoch weder die Öffnung noch die gegenüberliegende Öffnung noch der Kanal (33) transluzent oder opak verschlossen werden.

9. Verfahren nach einem der Ansprüche 3 bis 8, **dadurch gekennzeichnet, dass** eine der weiteren Substratschichten (42, 43, 46) als für eine Lasermarkierung geeignete Substratschicht (46) bereitgestellt oder hergestellt wird und so mit der mindestens einen opaken Substratschicht (14) zusammengeführt wird, dass diese zwischen einer Oberseite (17) des gebildeten Verbundkörpers (11) und der einen Drucklage (16) oder den mehreren Drucklagen, welche Mikroperforationen (15) bei einer Betrachtung in Reflexion durch die Oberseite (17) verdecken, und/oder zwischen einem verfärbten Rand (30) einer Mikroperforation (15) und der Oberseite (17), über die der verfärbte Rand (30) in Draufsicht durch die Oberseite (17) sichtbar ist, oder alternativ zwischen einer Unterseite (18) des gebildeten Verbundkörpers (11) und der einen Drucklage (16) oder den mehreren Drucklagen, welche Mikroperforationen (15) bei einer Betrachtung in Reflexion durch die Unterseite (18) verdecken, und/oder zwischen einem verfärbten Rand (35) einer Mikroperforation und der Unterseite (18), über die der verfärbte Rand (35) in Draufsicht durch die Unterseite (18) sichtbar ist, und eine Lasermarkierung (47) in der für die Lasermarkierung geeigneten Substratschicht (46) vorgenommen wird.

10. Flacher Verbundkörper mit einem innen liegenden Sicherheitsmerkmal, der eine Oberseite (17) und eine Unterseite (18) aufweist, die im Wesentlichen parallel zueinander orientiert sind, und wobei der Verbundkörper (11) von der Oberseite (17) zu Unterseite (18) hin aus mehreren in sich jeweils im Wesentlichen hinsichtlich der Materialeigenschaften homogenen Materialschichten (12-14) besteht und wobei der Verbundkörper mindestens eine innenliegende opake Materialschicht (14), welche diese Materialschicht durchdringende Mikroperforationen (15) umfasst, die jeweils zur Oberseite (17) und zur Unterseite (18) hin eine Öffnung aufweisen, und an der Oberseite und an der der Unterseite jeweils mindestens eine weitere transparente oder transluzente Materialschicht (12, 13) umfasst,
**dadurch gekennzeichnet, dass**
die Materialschichten (12-14) alle auf Basis desselben thermoplastischen Polymermaterials hergestellt sind und der Verbundkörper (11) hinsichtlich der Polymerstruktur monolithisch ausgebildet ist und die Oberseite (17) und die Unterseite (18) zumindest in einem Bereich (19), in dem die innenliegeden Mikroperforationen (15) ausgebildet sind, eben sind.

11. Flacher Verbundkörper nach Anspruch 10, **dadurch gekennzeichnet, dass** der Verbundkörper neben der mindestens einen innenliegenden opaken Materialschicht mindestens eine weitere innenliegende opake Materialschicht umfasst, in der weitere, die mindestens eine weitere opake Materialschicht durchdringende Mikroperforationen ausgebildet sind, wobei zwischen der mindestens einen innenliegenden opaken Materialschicht und der mindestens einen weiteren innenliegenden opaken Materialschicht mindestens eine zusätzliche transparente oder transluzente Materialschicht angeordnet ist und die mindestens eine weitere innenliegende opake Materialschicht und die mindestens eine zusätzliche transparente oder transluzente Materialschicht auf Basis desselben thermoplastischen Polymermaterials hergestellt sind wie die mindestens eine innenliegende opake Materialschicht (14) und die weiteren Materialschichten (12,13), so dass der Verbundkörper (11) hinsichtlich der Polymerstruktur aller Schichten monolithisch ausgebildet ist.

12. Flacher Verbundkörper nach Anspruch 10 oder 11 **dadurch gekennzeichnet, dass** zwischen einerseits der Oberseite (17) und/oder der Unterseite (18) und andererseits den Mikroperforationen (15) und/oder weiteren Mikroperforationen transluzente Farbmittel angeordnet sind, so dass in dem Verbundkörper eine Vielzahl der Mikroperforationen (15) und/oder weiteren Mikroperforationen (15'), vorzugsweise sämtliche Mikroperforationen (15) und/oder sämtliche weitere Mikroperforationen (15'), durch die transluzenten Farbmittel bei einer Betrachtung in Reflexion verdeckt und nicht wahrnehmbar sind, jedoch ein durch die Mikroperforationen (15) gebildetes Muster (22) im Durchlicht wahrnehmbar ist.

13. Flacher Verbundkörper nach einem der Ansprüche 10 bis 12, **dadurch gekennzeichnet, dass** die Mikroperforationen (15) und/oder weiteren Mikroperforationen mit einem transparenten Füllmaterial (21) ausgefüllt sind.

14. Flacher Verbundkörper nach einem der Ansprüche 10 bis 13, **dadurch gekennzeichnet, dass** bei einem Teil der Mikroperforationen (15) ein Rand (30) einer Öffnung, gegebenenfalls zusätzlich eine Wandung (32) eines Kanals (33) und gegebenenfalls ferner zusätzlich ein Rand (35) einer gegenüberliegenden Öffnung verfärbt sind, ohne dass der Kanal (33) transluzent oder opak verfüllt ist.

15. Flacher Verbundkörper nach einem der Ansprüche 12 bis 14, **dadurch gekennzeichnet, dass** Lasermarkierungen (47) im Innern des Verbundkörpers (11) ausgebildet sind, welche in Reflexion durch die Oberseite (17) und/oder durch die Unterseite (18) gemeinsam mit der oder den Mikroperforationen (15) verdeckenden Drucklagen (16) und/oder gemeinsam mit der Verfärbung mindestens eines Rands (30) einer Öffnung einer der Mikroperforationen (15), welche nicht transluzent verdeckt oder verfüllt ist, beobachtbar ist.

## Claims

1. Method for producing a composite body (11) with an internal security feature comprising the steps of:
providing at least one opaque substrate layer;
introducing microperforations (15) into the at least one opaque substrate layer;
providing at least two further transparent and / or translucent substrate layers;
bringing the at least one opaque substrate layer together with the at least two further substrate layers in such a way that the at least one opaque substrate layer is arranged between the at least two further substrate layers, **characterised in that** the at least one provided opaque substrate layer and the at least two further provided substrate layers are selected or produced in such a way that the said substrate layers are formed on the basis of the same thermoplastic polymer material, and the substrate layers brought together are joined in a high-temperature, high-pressure lamination process to form the composite body (11), and thus the composite body is monolithically formed, and wherein an upper face (17) and a flat lower face (18) of the composite body (11) are flat at least in the area (19) of the internal microperforations (15).

2. Method according to claim 1, **characterised in that** at least one further opaque substrate layer is provided and microperforations (15') are introduced into the at least one further opaque substrate layer, **in that** at least one additional transparent or translucent substrate layer is provided and in bringing the at least one opaque substrate layer together with the at least two other substrate layers, the at least one further opaque substrate layer and the at least one additional transparent or translucent substrate layer are arranged such that the at least one additional transparent or translucent substrate layer is arranged between the at least one opaque substrate layer and the at least one further opaque substrate layer, and the at least one opaque substrate layer and the at least one further opaque substrate layer are arranged between the at least two further substrate layers.

3. Method according to claim 1 or 2, **characterised in that** one of the substrate layers is printed with one or more translucent colour compositions in two dimensions over at least one area, so that in the composite body (11) a multiplicity, preferably all, of the microperforations (15) are covered by one or more of the printed layer (16) or printed layers formed by the one or the multiple printed translucent colour compositions when regarded in reflection and are not perceptible through one of the further transparent and / or translucent substrate layers, although the microperforations are all perceptible when regarded under transmitted light.

4. Method according to claim 3, **characterised in that** the at least one translucent colour composition or the multiple translucent colour compositions are produced on a basis of the same thermoplastic polymer material or such colour compositions are selected as the at least one translucent colour composition or the multiple colour compositions, wherein said colour compositions are produced on the basis of the same thermoplastic polymer materials as the substrate layers.

5. Method according to any one of claims 1 to 4, **characterised in that** the microperforations (15) are introduced in the form of perforation patterns (24), wherein the perforation patterns (24) created one after the other are made differently, in particular in order to save individualising or personalising information in the respective composite body (11).

6. Method according to any one of claims 1 to 5, **characterised in that** the microperforations (15) are filled with a transparent filling material (22) before being joined together by means of in a high-temperature, high-pressure lamination process.

7. Method according to any one of claims 1 to 6, **characterised in that** some or all of the microperforations (15, 15') are made with a laser such that one edge (30) of the openings of the microperforations on each side (31) of the opaque substrate layer (14), onto which the laser beam for introducing the microperforations (15, 15') is oriented, and if applicable in addition their internal walls (32) are coloured.

8. Method according to any one of claims 1 to 7, **characterised in that** a colouring preparation is printed at least onto a group of the microperforations (15) in a targeted manner, wherein the viscosity and / or surface tension of said colour preparation is selected such that in each case only one edge (30) of the opening of the perforations (15) printed in a targeted manner and if applicable in addition the internal wall (32) and if applicable also in addition one edge (35) of an opposite opening of the opaque substrate layer (14) is coloured, but neither the opening nor the opposite opening or the channel (33) are closed in a translucent or opaque manner.

9. Method according to any one of claims 3 to 8, **characterised in that** one of the further substrate layers (42, 43, 46) is provided or produced as a substrate layer (46) suitable for laser marking, and thus is brought together with the at least one opaque substrate layer (14) such that it is visible between an upper face (17) of the formed composite body (11) and the one printed layer (16) or the multiple printed layers which cover microperforations (15) when regarded in reflection through the upper face (17), and / or between a coloured edge (30) of a microperforation and the upper face (17), by means of which the coloured edge (30) is visible through the upper face (17) regarded from above, or alternatively between a lower face (18) of the formed composite body (11) and the one printed layer (16) or the multiple printed layers, which cover microperforations (15) when regarded in reflection through the lower face (18), and / or between a coloured edge (35) of a microperforation and the lower face (18), by means of which the coloured edge (35) is visible through the lower face (18) regarded from above, and a laser marking (47) is carried out in the substrate layer (46) suitable for the laser marking.

10. Flat composite body with an internal security feature, which has an upper face (17) and a lower face (18), which are oriented substantially parallel to each other, and wherein the composite body (11) comprises, from the upper face (17) to the lower face (18), multiple material layers (12-14) each being substantially homogeneous in terms of material properties, and wherein the composite body comprises at least one internal opaque material layer (14), which includes microperforations (15) penetrating this material layer, wherein said microperforations each have an opening to the upper face (17) and to the lower face (18), and at least one further transparent or translucent material layer (12, 13) in each case on the upper face and on the lower face,
**characterised in that**
the material layers (12-14) are all produced on the basis of the same thermoplastic polymer material, and the composite body (11) is monolithically formed in terms of the polymer structure, and the upper face (17) and the lower face (18) are flat at least in one area (19), in which the internal microperforations (15) are formed.

11. Flat composite body according to claim 10, **characterised in that** the composite body comprises, in addition to the at least one internal opaque material layer, at least one further internal opaque material layer in which further microperforations penetrating the at least one further opaque material layer are formed, wherein between the at least one internal opaque material layer and the at least one further internal opaque material layer, at least one additional transparent or translucent material layer is arranged, and the at least one further internal opaque material layer and the at least one additional transparent or translucent material layer are produced on the basis of the same thermoplastic polymer material as the at least one internal opaque material layer (14) and the further material layers (12, 13) so that the composite body (11) is monolithically formed in terms of the polymer structure of all the layers.

12. Flat composite body according to claim 10 or 11, **characterised in that** between the upper face (17) and / or the lower face (18) on the one hand and the microperforations (15) and / or further microperforations on the other, translucent colorants are arranged, so that in the composite body, a multiplicity of microperforations (15) and / or further microperforations (15'), preferably all microperforations (15) and / or all further microperforations (15'), are covered by the translucent colorants and not perceptible when seen in reflection, but a pattern (22) formed by the microperforations (15) is perceptible under transmitted light.

13. Flat composite body according to any one of claims 10 to 12, **characterised in that** the microperforations (15) and / or further microperforations are filled with a transparent filling material (21).

14. Flat composite body according to any one of claims 10 to 13, **characterised in that**, on some of the microperforations (15), one edge (30) of an opening, if applicable also a wall (32) of a channel (33) and if applicable moreover additionally one edge (35) of an opposite opening, are coloured without the channel (33) being filled in a translucent or opaque manner.

15. Flat composite body according to any one of claims 12 to 14, **characterised in that** laser marks (47) are formed inside the composite body (11), which can be observed in reflection through the upper face (17) and / or through the lower face (18) together with the printed layer or layers (16) covering the microperforations and / or together with the colouring at least of one edge (30) of an opening of one of the microperforations (15), which is not covered or filled in a translucent or opaque manner.

## Revendications

1. Procédé de fabrication d'un corps composite (11) avec une caractéristique de sécurité intérieure, comprenant les étapes suivantes :
mise à disposition d'au moins une couche de substrat opaque ;
introduction de microperforations (15) dans l'au moins une couche de substrat opaque;
mise à disposition d'au moins deux autres couches de substrat transparentes et/ou translucides ; réunion de l'au moins une couche de substrat opaque avec les au moins deux autres couches de substrat de sorte que l'au moins une couche de substrat opaque soit disposée entre les au moins deux autres couches de substrat,
**caractérisé en ce que**
l'au moins une couche de substrat opaque mise à disposition et les au moins deux autres couches de substrat mises à disposition sont sélectionnées ou fabriquées de sorte que celles-ci soient réalisées sur la base du même matériau polymère thermoplastique, et les couches de substrat réunies sont assemblées dans un procédé de laminage haute pression à haute température pour former le corps composite (11) de sorte que celui-ci soit réalisé de manière monolithique et un côté supérieur (17) et un côté inférieur (18) plan du corps composite (11) soient réalisés de manière plane au moins dans la zone (19) des microperforations (15) intérieures.

2. Procédé selon la revendication 1, **caractérisé en ce qu'**au moins une autre couche de substrat opaque est mise à disposition et d'autres microperforations (15') sont introduites dans l'au moins une autre couche de substrat opaque, **en ce qu'**au moins une couche de substrat transparente ou translucide supplémentaire est mise à disposition et lors de la réunion de l'au moins une couche de substrat opaque avec les au moins deux autres couches de substrat, l'au moins une autre couche de substrat opaque et l'au moins une couche de substrat transparente ou translucide supplémentaire sont disposées de sorte que l'au moins une couche de substrat transparente ou translucide supplémentaire soit disposée entre l'au moins une couche de substrat opaque et l'au moins une autre couche de substrat opaque, et l'au moins une couche de substrat opaque et l'au moins une autre couche de substrat opaque soient disposées entre les au moins deux autres couches de substrat.

3. Procédé selon la revendication 1 ou 2, **caractérisé en ce que** l'une des couches de substrat est imprimée avec une ou plusieurs compositions d'encre translucide sur la surface d'au moins une zone de sorte que dans le corps composite (11), une pluralité, de préférence toutes les microperforations (15) soient cachées par une couche d'impression (16) ou des couches d'impression formées à partir de l'une ou des plusieurs compositions d'encre translucides imprimées en cas d'observation par réflexion et ne soient pas perceptibles par l'une des autres couches de substrat transparentes et/ou translucides, les microperforations étant toutefois toutes perceptibles en cas d'observation par transparence.

4. Procédé selon la revendication 3, **caractérisé en ce que** l'au moins une composition d'encre translucide ou les plusieurs compositions d'encre translucides sont fabriquées sur la base du même matériau polymère thermoplastique ou de telles compositions d'encre sont sélectionnées comme l'au moins une composition d'encre translucide ou les plusieurs compositions d'encre, lesquelles sont fabriquées sur la base du même matériau polymère thermoplastique que les couches de substrat.

5. Procédé selon l'une quelconque des revendications 1 à 4, **caractérisé en ce que** les microperforations (15) sont introduites sous la forme de modèles de perforation (24), les modèles de perforation (24) générés les uns après les autres étant réalisés différemment, en particulier afin de stocker des informations d'individualisation ou de personnalisation dans le corps composite respectif (11).

6. Procédé selon l'une quelconque des revendications 1 à 5, **caractérisé en ce que** les microperforations (15) sont remplies avant l'assemblage à l'aide du procédé de laminage haute pression à haute température avec un matériau de remplissage (22) transparent.

7. Procédé selon l'une quelconque des revendications 1 à 6, **caractérisé en ce qu'**une partie de la ou des microperforations (15, 15') est réalisée avec un laser de sorte qu'un bord (30) des ouvertures des microperforations sur chaque côté (31) de la couche de substrat (14) opaque, sur lequel le rayon laser est dirigé pour l'introduction des microperforations (15, 15'), et éventuellement en outre ses parois intérieures (32) soient colorés.

8. Procédé selon l'une quelconque des revendications 1 à 7, **caractérisé en ce qu'**au moins sur un groupe de microperforations (15), une préparation de coloration est imprimée de manière ciblée, dont la viscosité et/ou la tension de surface sont choisies de sorte que respectivement un seul bord (30) de l'ouverture des perforations (15) imprimées de manière ciblée et éventuellement en outre la paroi intérieure (32) ainsi qu'éventuellement de plus en outre un bord (35) d'une ouverture opposée de la couche de substrat opaque (14) soient colorés, ni l'ouverture ni l'ouverture opposée ni le canal (33) n'étant toutefois fermés de manière translucide ou opaque.

9. Procédé selon l'une quelconque des revendications 3 à 8, **caractérisé en ce que** l'une des autres couches de substrat (42, 43, 46) est mise à disposition ou fabriquée comme couche de substrat (46) appropriée à un marquage laser et est réunie avec l'au moins une couche de substrat opaque (14) de sorte que celle-ci soit disposée entre un côté supérieur (17) du corps composite (11) formé et l'une couche d'impression (16) ou les plusieurs couches d'impression qui cachent des microperforations (15) en cas d'observation par réflexion par le côté supérieur (17), et/ou entre un bord coloré (30) d'une microperforation (15) et le côté supérieur (17) par lequel le bord coloré (30) peut être visible en vue en élévation par le côté supérieur (17) ou en variante entre un côté inférieur (18) du corps composite (11) formé et l'une couche d'impression (16) ou les plusieurs couches d'impression qui cachent des microperforations (15) en cas d'observation par réflexion par le côté inférieur (18) et/ou entre un bord coloré (35) d'une microperforation et le côté inférieur (18), par lequel le bord coloré (35) est visible en vue en élévation par le côté inférieur (18), et un marquage laser (47) est entrepris dans la couche de substrat (46) appropriée au le marquage laser.

10. Corps composite plat avec une caractéristique de sécurité intérieure qui présente un côté supérieur (17) et un côté inférieur (18) qui sont orientés sensiblement parallèlement l'un à l'autre, et le corps composite (11) se composant du côté supérieur (17) au côté inférieur (18) de plusieurs couches de matériau (12-14) respectivement sensiblement homogènes en soi en ce qui concerne les propriétés de matériau et le corps composite comportant au moins une couche de matériau opaque intérieure (14) qui comporte des microperforations (15) pénétrant cette couche de matériau qui présentent une ouverture respectivement vers le côté supérieur (17) et le côté inférieur (18), et comporte sur le côté supérieur et sur le côté inférieur respectivement au moins une autre couche de matériau transparente ou translucide (12,13),
**caractérisé en ce que** les couches de matériau (12-14) sont toutes fabriquées sur la base du même matériau polymère thermoplastique et le corps composite (11) est réalisé de manière monolithique en ce qui concerne la structure de polymère et le côté supérieur (17) et le côté inférieur (18) sont plans au moins dans une zone (19), dans laquelle les microperforations (15) sont réalisées.

11. Corps composite plat selon la revendication 10, **caractérisé en ce que** le corps composite comporte à côté de l'au moins une couche de matériau opaque intérieure au moins une autre couche de matériau opaque intérieure, dans laquelle d'autres microperforations pénétrant l'au moins une autre couche de matériau opaque sont réalisées, au moins une couche de matériau transparente ou translucide supplémentaire étant disposée entre l'au moins une couche de matériau opaque intérieure et l'au moins une autre couche de matériau opaque intérieure, et l'au moins une autre couche de matériau opaque intérieure et l'au moins une autre couche de matériau transparente ou translucide supplémentaire sont fabriquées sur la base du même matériau polymère thermoplastique que l'au moins une couche de matériau (14) opaque intérieure et les autres couches de matériau (12, 13) de sorte que le corps composite (11) soit réalisé de manière monolithique en ce qui concerne la structure de polymère de toutes les couches.

12. Corps composite plat selon la revendication 10 ou 11, **caractérisé en ce que** des moyens de coloration translucides sont disposés entre d'une part le côté supérieur (17) et/ou le côté inférieur (18) et d'autre part les microperforations (15) et/ou d'autres microperforations de sorte que le corps composite contienne une pluralité de microperforations (15) et/ou d'autres microperforations (15'), de préférence toutes les microperforations (15) et/ou toutes les autres microperforations (15'), par lesquelles les moyens de coloration translucides sont cachés en cas d'observation par réflexion et ne sont pas perceptibles, un modèle formé (22) par les microperforations (15) étant toutefois perceptibles par transparence.

13. Corps composite plat selon l'une quelconque des revendications 10 à 12, **caractérisé en ce que** les microperforations (15) et/ou d'autres microperforations sont remplies d'un matériau de remplissage (21) transparent.

14. Corps composite plat selon l'une quelconque des revendications 10 à 13, **caractérisé en ce que** pour une partie des microperforations (15), un bord (30) d'une ouverture, éventuellement en outre une paroi (32) d'un canal (33) et éventuellement de plus en outre un bord (35) d'une ouverture opposée sont colorés sans que le canal (33) ne soit rempli de manière translucide ou opaque.

15. Corps composite plat selon l'une quelconque des revendications 12 à 14, **caractérisé en ce que** des marquages laser (47) sont réalisés à l'intérieur du corps composite (11) qui peuvent être observés par réflexion par le côté supérieur (17) et/ou par le côté inférieur (18) conjointement avec des couches d'impression (16) couvrant la ou les microperforations (15) et/ou conjointement avec la coloration au moins d'un bord (30) d'une ouverture de l'une des microperforations (15) qui n'est pas cachée ou remplie de manière translucide.
